# EUROPEAN PATENT SPECIFICATION

(11) **EP 3 006 504 B1**
(45) Date of publication and mention of the grant of the patent: **03.04.2019**
(21) Application number: 14804222.9
(22) Date of filing: 30.05.2014
(51) Int. Cl.: C08L 71/02, C08F 120/28, C08L 33/14, C09D 133/14, C09D 143/04, C09D 183/02, C09D 183/14, C09K 3/10

(54) **CURABLE COMPOSITION, AND CURED PRODUCT THEREOF**
HÄRTBARE ZUSAMMENSETZUNG UND GEHÄRTETES PRODUKT DARAUS
COMPOSITION DURCISSABLE ET PRODUIT DURCI OBTENU

(30) Priority: 30.05.2013 JP 2013114604
(43) Date of publication of application: 13.04.2016
(73) Proprietor: Kaneka Corporation, Osaka-shi, Osaka 530-8288 (JP)
(72) Inventor: MIYAFUJI, Kiyoshi, Takasago-shi Hyogo 676-8688 (JP)
(74) Representative: Vossius & Partner Patentanwälte Rechtsanwälte mbB
(86) International application number: PCT/JP2014/064391
(87) International publication number: WO 2014/192914

(56) References cited:
- WO-A1-2012/020560
- WO-A1-2012/117902
- WO-A1-2014/050592
- JP-A- H1 112 455
- JP-A- 2001 323 210
- JP-A- 2001 354 846
- JP-A- 2002 201 350
- JP-A- 2003 221 501
- JP-A- 2003 313 418
- JP-A- 2005 179 860
- US-A1- 2006 241 249

## Description

### Technical Field

The present invention relates to a curable composition containing an organic polymer having a hydroxy group or hydrolyzable group on a silicon atom and a silicon group capable of forming a siloxane bond (hereinafter to be also referred to as a "reactive silicon group") and a cured product thereof.

### Background Art

Organic polymers containing a reactive silicon group are known to react even at room temperature due to moisture etc., and crosslink by a siloxane condensation reaction of a reactive silicon group to produce a rubbery cured product. Of such organic polymers, polyoxyalkylene having a reactive silicon group has a comparatively low viscosity, and is superior in the workability during use. In addition, a cured product obtained from polyoxyalkylene having a reactive silicon group shows good property balance of mechanical property, weather resistance, dynamic durability and the like, and the polymer is widely used as a sealing material, an adhesive, a paint and the like. (patent document 1).

Workability and various properties of a curable composition containing a reactive silicon group-containing polymer can be adjusted by adding various components such as filler, plasticizer and the like. To impart weather resistance and adhesiveness, it is practical to use reactive-silicon group-containing polyoxyalkylene and a reactive silicon group-containing poly(meth)acrylate in combination (patent document 2). These are utilized as high weather resistant sealants and industrial adhesives.

Patent document 3 discloses that a high-strength cured product can be obtained by a combination of reactive silicon group-containing polyoxyalkylene and poly (meth) acrylate having a trifunctional reactive silicon group.

### [Document List]

### Patent Documents

patent document 1: JP-A-52-73998
patent document 2: JP-A-59-122541
patent document 3: WO 2009/133811

JP 2003-313418 discloses a curable composition comprising a polyoxyalkylene polymer having a silicon-containing functional group that is cross-linkable by forming siloxane bonds, and a polymer, which consists of alkyl acrylate monomer units and/or alkyl methacrylate monomer units, the polymer having one silicon-containing functional group that is cross-linkable by forming siloxane bonds. A high-molecular-weight type plasticizer can be used.

US 2006/0241249 discloses a process for production of a curable resin composition which comprises an oxyalkylene polymer having one or more silicon-containing functional groups capable of cross-linking by forming siloxane bonds and a polymer having one or more silicon-containing functional groups capable of cross-linking by forming siloxane bonds and having a molecular chain substantially comprising alkyl acrylate monomer units and/or alkyl methacrylate monomer units.

### SUMMARY OF THE INVENTION

### Problems to be Solved by the Invention

When the technique disclosed in patent document 3 is used to obtain a high-strength cured product, workability tends to be poor due to the high viscosity of a curable composition, and elongation of the obtained cured product is problematically insufficient. On the other hand, when attempts are made to afford low viscosity with a plasticizer, the strength of the obtained cured product problematically decreases. In view of these situations, the present invention aims to provide a curable composition having low viscosity and affording a cured product with high strength and high elongation.

### Means of Solving the Problems

The present inventors have conducted intensive studies to achieve the above-mentioned object and completed the following invention:
[1] A curable composition comprising oxyalkylene-based polymer (A) having more than one reactive silicon group on average in one molecule, which group is a dimethoxymethylsilyl group, (meth)acrylate-based polymer (B) having a reactive silicon group represented by the formula (2): -SiX3 (2) wherein each X is independently a hydroxy group or a hydrolyzable group, wherein a reactive silicon group equivalent is not less than 0.30 mmol/ g, and high-molecular weight plasticizer (C1) having more than 0 and not more than one reactive silicon group on average in one molecule, which group is a dimethoxymethylsilyl group, wherein the high-molecular weight plasticizer (C 1) has a number average molecular weight of 1,000 to 15,000.
[2] The curable composition of the aforementioned [1], wherein polymer (A) has not less than 1.2 reactive silicon groups on average in one molecule.
[3] The curable composition of any one of the aforementioned [1] or [2], wherein the high-molecular weight plasticizer (C) is an oxyalkylene-based polymer.
[4] The curable composition of any one of the aforementioned [1] or [2], wherein the high-molecular weight plasticizer (C) is a (meth)acrylate-based polymer.
[5] The curable composition of any one of the aforementioned [1] - [4], wherein the content of the high-molecular weight plasticizer (C) is 20 - 100 parts by weight per 100 parts by weight of the total content of polymer (A) and polymer (B).
[6] The curable composition of any one of the aforementioned [1] - [5], wherein the weight ratio of polymer (A) and polymer (B) (polymer (A): polymer (B)) is 90:10 - 30:70.
[7] The curable composition of any one of the aforementioned [1] - [6], wherein the polymer (A) has more than one reactive silicon group on average in one terminal part.
[8] The curable composition of any one of the aforementioned [1] - [7], wherein monomers constituting the polymer (B) comprise alkyl (meth)acrylate wherein the alkyl has 1 - 6 carbon atoms, and alkyl (meth)acrylate wherein the alkyl has 7 - 30 carbon atoms.
[9] The curable composition of any one of the aforementioned [1] - [7], wherein monomer(s) constituting the polymer (B) comprise(s), in the total monomer, not less than 40 wt% of monomer (b1), the homopolymer of said monomer having a glass transition temperature of not more than 80°C.
[10] The curable composition of any one of the aforementioned [1] - [9], wherein the polymer (B) has a number average molecular weight of not less than 4,000.
[11] The curable composition of any one of the aforementioned [1] - [9], wherein the polymer (B) has a number average molecular weight of not less than 1,000 and less than 4,000.
[12] The curable composition of any one of the aforementioned [1] - [11], wherein the monomer(s) constituting the polymer (B) comprise(s), in the total monomer, not less than 40 wt% of monomer (b2) free of a reactive silicon group, the homopolymer of said monomer having a glass transition temperature of not less than -25°C.
[13] The curable composition of any one of the aforementioned [1] - [12], further comprising, as a filler, heavy calcium carbonate having an average primary particle size of less than 1 µm.
[14] The curable composition of any one of the aforementioned [1] - [13] further comprising titanium oxide as a filler.
[15] The curable composition of any one of the aforementioned [1] - [14], further comprising aluminum hydroxide as a filler.
[16] A coating film waterproofing agent comprising the curable composition of any one of the aforementioned [1] - [15].
[17] A cured product obtained from the curable composition of any one of the aforementioned [1] - [15].

### Effect of the Invention

The curable composition having low viscosity of the present invention affords a cured product having high strength and high elongation.

### Description of Embodiments

In the curable composition of the present invention, only one kind of each of the aforementioned polymer (A), polymer (B), high-molecular weight plasticizer (C), and other components to be mentioned below may be used, or two or more kinds thereof may be used in combination. Respective components are sequentially explained below.

### <Polymer (A)>

Oxyalkylene-based polymer (A) has a reactive silicon group represented by the formula (1):

-SiR¹ₐX₃₋ₐ (1)

wherein R¹ is a substituted or unsubstituted hydrocarbon group having 1 - 20 carbon atoms, each X is independently a hydroxy group or a hydrolyzable group (preferably a hydrolyzable group), and a is 0 or 1.

Examples of R¹ in the formula (1) include alkyl groups such as methyl group, ethyl group and the like; cycloalkyl groups such as cyclohexyl group and the like; aryl groups such as phenyl group and the like; aralkyl groups such as benzyl group and the like; triorganosiloxy groups represented by-OSi(R')₃ (wherein each R' is independently alkyl group (e.g., methyl group etc.) or aryl group (e.g., phenyl group etc.)); fluoroalkyl groups such as fluoromethyl group, difluoromethyl group and the like; chloroalkyl groups such as chloromethyl group, 1-chloroethyl group and the like; alkoxyalkyl groups such as methoxymethyl group, ethoxymethyl group, phenoxymethyl group, 1-methoxyethyl group and the like; aminoalkyl groups such as aminomethyl group, N-methylaminomethyl group, N,N-dimethylaminomethyl group and the like; acetoxymethyl group, methylcarbamate group, 2-cyanoethyl group and the like. From the aspect of the availability of the starting material, R¹ is preferably a methyl group.

As a hydrolyzable group for X in the formula (1), a known hydrolyzable group can be mentioned. As used herein, the hydrolyzable group means a group that reacts and is decomposed in the co-presence of water. Examples of the hydrolyzable group include hydrogen, halogen, alkoxy group, alkenyloxy group, aryloxy group, acyloxy group, amino group, amido group, aminooxy group, mercapto group and the like. Of these, halogen, alkoxy group (e.g., methoxy group, ethoxy group), alkenyloxy group (e.g., isopropenyloxy group (alias: isopropenoxy group)) and acyloxy group are preferable since the activity is high, alkoxy group is more preferable since it shows mild hydrolyzability and is easy to handle, and methoxy group and ethoxy group are particularly preferable. When the hydrolyzable group is ethoxy group or isopropenyloxy group, the compound that leaves due to hydrolysis is ethanol and acetone, respectively. From the aspect of safety, therefore, ethoxy group and isopropenyloxy group are preferable hydrolyzable groups.

According to the disclosure, the reactive silicon group represented by the formula (1) may be one kind, or two or more kinds, with preference given to one kind. As disclosed herein, the reactive silicon group represented by the formula (1) may preferably be a hydrolyzable group, more preferably trimethoxysilyl group, triethoxysilyl group, tris(2-propenyloxy)silyl group, triacetoxysilyl group, diethoxymethylsilyl group, diisopropoxymethylsilyl group, (chloromethyl)dimethoxysilyl group, (methoxymethyl)dimethoxysilyl group, (methoxymethyl)diethoxysilyl group, or (ethoxymethyl)dimethoxysilyl group, further preferably a trimethoxysilyl group since a cured product with high strength can be obtained. According to the invention, the reactive silicon group represented by formula (1) is a dimethoxymethylsilyl group since a cured product with high elongation can be obtained.

Oxyalkylene-based polymer (A) has a comparatively low glass transition temperature, and a cured product obtained therefrom is superior in cold resistance. Oxyalkylene-based polymer (A) has high moisture permeability. When the curable composition of the present invention is provided as a one-component composition, it characteristically shows superior depth curability, and superior adhesiveness of a cured product.

Examples of the main chain (i.e., polyoxyalkylene part free of reactive silicon group) of oxyalkylene-based polymer (A) include polyoxyethylene, polyoxypropylene, polyoxybutylene, polyoxytetramethylene, polyoxyethylene-polyoxypropylene copolymer, polyoxypropylene-polyoxybutylene copolymer and the like. The main chain of the oxyalkylene-based polymer (A) may be composed of only one kind of constitutional unit or composed of two or more kinds of constitutional units. Particularly, when the curable composition of the present invention is used for a sealant, adhesive and the like, oxypropylene-based polymer (A) containing not less than 50 wt%, preferably not less than 80 wt%, of the constitutional unit of oxypropylene in the whole constitutional units is desirably used. Such oxypropylene-based polymer (A) is amorphous, and comparatively low viscose.

Polymer (A) may be linear or branched chain. Since a cured product with high elongation can be obtained, polymer (A) is preferably linear. When polymer (A) is a branched chain, the number of the branched chain is preferably 1 - 4, more preferably 1.

Polyoxyalkylene free of reactive silicon group can be produced by ring opening polymerization reaction of a cyclic ether compound, by using a polymerization catalyst in the presence an initiator. Examples of the cyclic ether compound include ethylene oxide, propylene oxide, butylene oxide, tetramethylene oxide, tetrahydrofuran and the like. Only one kind of these cyclic ether compounds may be used, or two or more kinds may be used in combination. Of these cyclic ether compounds, propylene oxide is preferable since amorphous polyoxyalkylene having comparatively low viscosity can be obtained.

Examples of the initiator include alcohols such as ethylene glycol, propylene glycol, butanediol, hexamethylene glycol, neopentyl glycol, diethylene glycol, dipropylene glycol, triethylene glycol, glycerol, trimethylolmethane, trimethylolpropane, pentaerythritol, sorbitol and the like; hydroxy group-containing polyoxyalkylene having a number average molecular weight of 300 - 4,000 such as polyoxypropylene diol, polyoxypropylene triol, polyoxyethylene diol, polyoxyethylene triol and the like, and the like.

While the synthesis method of polyoxyalkylene free of reactive silicon group is not particularly limited, for example, a polymerization method using an alkali catalyst such as KOH, a polymerization method using a transition metal compound - porphyrin complex catalyst such as a complex obtained by reacting an organic aluminum compound and porphyrin as shown in JP-A-61-215623, a polymerization method using a composite metal cyanide complex catalyst as shown in JP-B-46-27250, JP-B-59-15336, US-B-3278457, US-B-3278458, US-B-3278459, US-B-3427256, US-B-3427334, US-B-3427335 and the like, a polymerization method using a catalyst comprising a polyphosphagen salt shown in JP-A-10-273512, a polymerization method using a catalyst comprising a phosphagen compound shown in JP-A-11-060722 and the like. A polymerization method using a composite metal cyanide catalyst (e.g., zinc hexacyanocobaltate glyme complex catalyst etc.) is preferable for reasons of production cost, a polymer with narrow molecular weight distribution to be obtained and the like.

A method of introducing a reactive silicon group into polyoxyalkylene is not particularly limited, and a known method can be utilized. Examples of the introduction method of reactive silicon group include methods of the following (i) and (ii) .

### (i) Hydrosilylation

A method including introducing an unsaturated bond into polyoxyalkylene as a starting material (hereinafter to be also referred to as "prepolymer"), and adding a hydrosilane compound to the unsaturated bond by a hydrosilylation reaction can be mentioned. An introduction method of the unsaturated bond is not particularly limited and, for example, a method including reacting a prepolymer having a functional group such as hydroxy group and the like with a compound having a group that reacts with the functional group to form a bond and an unsaturated bond to give a polymer containing an unsaturated bond; a method including polymerization of a monomer having an unsaturated bond; and the like can be mentioned.

Examples of the hydrosilane compound usable in the method of the above-mentioned (i) include halogenated silanes such as trichlorosilane, dichloromethylsilane, dichlorophenylsilane, (methoxymethyl)dichlorosilane and the like; alkoxysilanes such as dimethoxymethylsilane, diethoxymethylsilane, trimethoxysilane, triethoxysilane, (chloromethyl)dimethoxysilane, (methoxymethyl)dimethoxysilane and the like; isopropenyloxysilanes such as triisopropenyloxysilane, (chloromethyl)diisopropenyloxysilane, (methoxymethyl)diisopropenyloxysilane and the like, and the like.

### (ii) Reaction of polymer containing reactive group (prepolymer) and silane coupling agent

A method including reacting a prepolymer having a functional group such as hydroxy group, amino group, unsaturated bond and the like, and a compound having both a group that reacts with the functional group thereof to form a bond (hereinafter to be also referred to as "reactive group") and a reactive silicon group (silane coupling agent) can be mentioned. Examples of the combination of a functional group of a prepolymer and a reactive group of a silane coupling agent include, but are not limited to, a hydroxy group and an isocyanate group, a hydroxy group and an epoxy group, an amino group and an isocyanate group, an amino group and a thioisocyanate group, an amino group and an epoxy group, an amino group and an α,β-unsaturated carbonyl group (reaction by Michael addition), a carboxy group and an epoxy group, an unsaturated bond and a mercapto group and the like.

Examples of the silane coupling agent usable in the method of the above-mentioned (ii) include mercaptosilanes that react with an unsaturated bond, such as 3-mercaptopropyltrimethoxysilane, 3-mercaptopropyldimethoxymethylsilane, 3-mercaptopropyltriethoxysilane, mercaptomethyltriethoxysilane, mercaptomethyldimethoxymethylsilane and the like; isocyanate silanes that react with a hydroxy group, such as 3-isocyanatepropyltrimethoxysilane, 3-isocyanatepropyldimethoxymethylsilane, 3-isocyanatepropyltriethoxysilane, isocyanatemethyltrimethoxysilane, isocyanatemethyltriethoxysilane, isocyanatemethyldimethoxymethylsilane and the like; epoxysilanes that react with a hydroxy group, an amino group or a carboxy group, such as 3-glycidoxypropyltrimethoxysilane, 3-glycidoxypropyldimethoxymethylsilane, 3-glycidoxypropyltriethoxysilane, glycidoxymethyltrimethoxysilane, glycidoxymethyltriethoxysilane, glycidoxymethyldimethoxymethylsilane and the like; aminosilanes that react with an isocyanate group or a thioisocyanate group, such as 3-aminopropyltrimethoxysilane, 3-aminopropyldimethoxymethylsilane, 3-aminopropyltriethoxysilane, 3-(2-aminoethyl)propyltrimethoxysilane, 3-(2-aminoethyl)propyldimethoxymethylsilane, 3-(2-aminoethyl)propyltriethoxysilane, 3-(N-ethylamino)-2-methylpropyltrimethoxysilane, 3-ureidopropyltrimethoxysilane, 3-ureidopropyltriethoxysilane, N-phenyl-3-aminopropyltrimethoxysilane, N-benzyl-3-aminopropyltrimethoxysilane, N-cyclohexylaminomethyltriethoxysilane, N-cyclohexylaminomethyldiethoxymethylsilane, N-phenylaminomethyltrimethoxysilane, (2-aminoethyl)aminomethyltrimethoxysilane, N,N'-bis[3-(trimethoxysilyl)propyl]ethylenediamine, bis(3-(trimethoxysilyl)propyl)amine and the like; hydroxyalkyl silanes 3-hydroxypropyltrimethoxysilane, hydroxymethyltriethoxysilane and the like, and the like.

The method of the above-mentioned (i) is advantageous in that the reaction is convenient, the amount of the reactive silicon group to be introduced can be adjusted, and the property of the obtained reactive silicon group containing polymer (A) is stable. The method of the above-mentioned (ii) is advantageous in that it has many alternatives of the reaction and the introduction rate of the reactive silicon group can be increased easily. A reactive silicon group may also be introduced into polyoxyalkylene by a known method other than the above-mentioned (i) and (ii).

The main chain of polymer (A) may contain an ester bond or an amido segment represented by the formula (3):

-NR²-C(=O)- (3)

wherein R² is an organic group having 1 - 10 carbon atoms or a hydrogen atom, as long as the effect of the invention is not impaired.

A cured product obtained from a curable composition containing polymer (A) containing an ester bond or an amido segment sometimes has high hardness and high strength due to the action of a hydrogen bond and the like. However, polymer (A) containing an amido segment and the like may be cleaved due to heat and the like. In addition, a curable composition containing polymer (A) containing an amido segment and the like tends to show high viscosity. In consideration of the above-mentioned merits and demerits, polyoxyalkylene containing amido segment and the like may be used as polymer (A), or polyoxyalkylene without containing amido segment and the like may be used.

Examples of the amido segment represented by the formula (3) include those formed by a reaction of an isocyanate group and a hydroxy group, a reaction of an amino group and a carbonate group, a reaction of an isocyanate group and an amino group, a reaction of an isocyanate group and a mercapto group and the like. Also, a segment formed by a reaction of the aforementioned amido segment containing an active hydrogen atom and an isocyanate group is included in the amido segment represented by the formula (3).

Examples of the production method of polymer (A) containing an amido segment include a method comprising reacting polyoxyalkylene having an active hydrogen-containing group on the terminal with an excess polyisocyanate compound to synthesize a polymer having an isocyanate group on the terminal, and thereafter or simultaneously with the synthesis, reacting a Z group of a silicon compound represented by the formula (4):

Z-R³-SiR¹ₐX₃₋ₐ (4)

wherein R¹, X and a are as defined above, R³ is a divalent organic group, preferably a divalent hydrocarbon group having 1 - 20 carbon atoms, and Z is a hydroxy group, a carboxy group, a mercapto group, a primary amino group or a secondary amino group, with the whole or a part of the isocyanate group of the synthesized polymer.

While the silicon compound of the formula (4) is not particularly limited, examples thereof include amino group-containing silanes such as γ-aminopropyldimethoxymethylsilane, γ-aminopropyltrimethoxysilane, N-(β-aminoethyl)-γ-aminopropyltrimethoxysilane, N-(β-aminoethyl)-γ-aminopropyldimethoxymethylsilane, (N-phenyl)-γ-aminopropyltrimethoxysilane, N-ethylaminoisobutyltrimethoxysilane, and the like; hydroxy group-containing silanes such as γ-hydroxypropyltrimethoxysilane and the like; mercapto group-containing silanes such as γ-mercaptopropyltrimethoxysilane, mercaptomethyltriethoxysilane and the like; and the like. Moreover, as described in JP-A-6-211879 (US-B-5364955), JP-A-10-53637 (US-B-5756751), JP-A-10-204144 (EP0831108), JP-A-2000-169544 and JP-A-2000-169545, Michael addition reaction product of various α,β-unsaturated carbonyl compounds and primary amino group-containing silane, and a Michael addition reaction product of various (meth)acryloyl group-containing silanes and a primary amino group-containing compound can also be used as the silicon compound represented by the formula (4).

Examples of the production method polymer (A) containing an amido segment include a method comprising reacting polyoxyalkylene having an active hydrogen-containing group on the terminal with a reactive silicon group-containing isocyanate compound represented by the formula (5):

O=C=N-R³-SiR¹ₐX₃₋ₐ (5)

wherein R³, R¹, X and a are as defined above.

While the reactive silicon group-containing isocyanate compound represented by the formula (5) is not particularly limited, examples thereof include γ-trimethoxysilylpropyl isocyanate, γ-triethoxysilylpropyl isocyanate, γ-methyldimethoxysilylpropyl isocyanate, γ-methyldiethoxysilylpropylisocyanate, γ-(methoxymethyl)dimethoxysilylpropylisocyanate, trimethoxysilylmethyl isocyanate, triethoxymethylsilylmethyl isocyanate, dimethoxymethylsilylmethyl isocyanate, diethoxymethylsilylmethyl isocyanate, (methoxymethyl)dimethoxysilylmethylisocyanate and the like.

When polymer (A) contains an amido segment, the number (average) of the amido segment per 1 molecule of polymer (A) is preferably 1 - 10, more preferably 1.5 - 5, particularly preferably 2 - 3. When the number is less than 1, curability may not be sufficient, and when it is larger than 10, polymer (A) has high viscosity and handling may become difficult. To lower the viscosity of the curable composition and improve workability, polymer (A) is preferably free of an amido segment.

Polymer (A) has, on average, more than one, preferably 1.2 or more, more preferably 1.3 or more, further preferably not less than 1.5, reactive silicon groups represented by the formula (1) in one molecule. The upper limit of the number (average) of the reactive silicon groups in one molecule of polymer (A) is preferably 6.0, more preferably 5.5, further preferably 5.0. When the number of the reactive silicon group is not more than 1, a cured product with high strength may not be obtained, and when the number of the reactive silicon group exceeds 6.0, a cured product with high elongation may not be obtained.

In the present invention, the number (average) of the reactive silicon groups in one molecule of polymer (A) is defined to be the average obtained by measurement and calculation of protons on carbon directly bonded to a reactive silicon group by high resolution ¹H-NMR method. In the measurement and calculation of the number of the reactive silicon groups, a prepolymer into which a reactive silicon group was not introduced and a polymer obtained by side reaction, into which a reactive silicon group was not introduced, during introduction of a reactive silicon group into a prepolymer, are considered to partly form polymer (A) and included in the parameter (molecule number of polymer (A)) of calculation of the number (average) of the reactive silicon groups.

Polymer (A) optionally has more than one reactive silicon group on average in one terminal part. Examples of the production method of polymer (A) having more than one reactive silicon group on average in one terminal part include a method comprising
(a) reacting polyoxyalkylene (prepolymer) having a hydroxy group in the terminal and an epoxy compound having an unsaturated bond to introduce the unsaturated bond and the hydroxy group into the terminal of the prepolymer,
(b) reacting a compound having a group (e.g., a halogen atom) that forms a bond by reacting with a hydroxy group, and an unsaturated bond with the obtained polymer to introduce plural unsaturated bonds into the terminal of the polymer,
(c) adding a hydrosilane compound to the plural unsaturated bonds by a hydrosilylation reaction.

Examples of the epoxy compound to be used in the above-mentioned reaction (a) include (meth)allyl glycidyl ether, glycidyl (meth)acrylate, butadiene monooxide, 1,4-cyclopentadiene monoepoxide and the like, reactive from the aspects of allyl glycidyl ether is preferable. In the present invention, "(meth)allyl" shows "allyl and/or methallyl", and "(meth)acrylate" shows "acrylate and/or methacrylate".

The amount of the epoxy compound to be used in the above-mentioned reaction (a) can be appropriately determined in consideration of the amount of the unsaturated bond to be introduced into polyoxyalkylene (prepolymer) having a hydroxy group in the terminal and reactivity thereof. The amount to be used is preferably not less than 0.2 mol, more preferably not less than 0.5 mol, preferably not more than 5.0 mol, preferably not more than 2.0 mol, per 1 mol of the hydroxy group in the polyoxyalkylene.

The reaction temperature in the above-mentioned reaction (a) is preferably not less than 60°C and not more than 150°C, more preferably not less than 110°C and not more than 140°C. When the reaction temperature is low, the reaction scarcely proceeds, and when the reaction temperature is too high, the main chain of polyoxyalkylene may be decomposed.

Examples of the compound having the reacting group that forms a bond by reacting with a hydroxy group and an unsaturated bond to be used in the above-mentioned reaction (b) include 3-chloro-1-propene, 3-chloro-2-methyl-1-propene and the like. The amount of the compound to be used in the above-mentioned reaction (b) is preferably not less than 1.1 mol, more preferably not less than 1.2 mol, preferably not more than 1.4 mol , per 1 mol of the hydroxy group in the aforementioned polymer.

The terminal of the polymer obtained by the above-mentioned reaction (b) is represented by the formula (6): 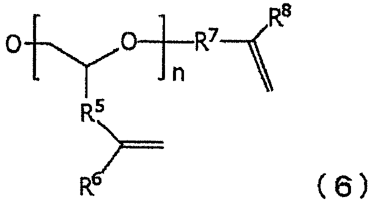 wherein R⁵ and R¹ are each independently a divalent organic group having 1 - 10 carbon atoms, which optionally contains an oxygen atom or a nitrogen atom, R⁶ and R⁸ are each independently a hydrogen atom or a hydrocarbon group having 1 - 10 carbon atoms, and n is an integer of 1 - 10.

Examples of the hydrosilane compound to be used in the above-mentioned reaction (c) include those exemplified for the method of the above-mentioned (i). The amount of the hydrosilane compound to be used in the above-mentioned reaction (c) is preferably not less than 0.65 mol, more preferably not less than 0.75 mol, preferably not more than 1.1 mol, more preferably not more than 1.2 mol, per 1 mol of the unsaturated bond in the aforementioned polymer.

The reactive silicon group of polymer (A) is preferably not less than 0.5, more preferably not less than 1.0, further preferably not less than 1.1, most preferably not less than 1.5, on average in one terminal part.

The number average molecular weight of polymer (A) is preferably not less than 8,000, more preferably not less than 9,000, still more preferably not less than 10,000, particularly preferably not less than 15,000, most preferably not less than 20,000, preferably not more than 50,000, more preferably not more than 35,000, further preferably not more than 30,000. When the number average molecular weight of polymer (A) is small, the workability during use of the curable composition is improved since the viscosity is low; however, the obtained cured product becomes stiff and the elongation tends to be low. On the other hand, when the number average molecular weight of polymer (A) is too high, the concentration of the reactive silicon group becomes too low, and the curing rate may become late, and the viscosity thereof becomes too high and the handling tends to become difficult.

While the molecular weight distribution (weight average molecular weight (Mw)/number average molecular weight (Mn)) of polymer (A) is not particularly limited, it is preferably narrow, more preferably less than 2.0, more preferably not more than 1.6, particularly preferably not more than 1.5, most preferably not more than 1.4.

The number average molecular weight (Mn) and weight average molecular weight (Mw) of polymer (A) are values measured by GPC (based on polystyrene), and a detailed measurement methods thereof are described in the below-mentioned Synthetic Example 1. The measurement methods of number average molecular weight (Mn) and the like of other components (polymer (B), high-molecular weight plasticizer (C) etc.) are the same. When the number average molecular weight of polymer (A) cannot be measured by GPC, by titration analysis based on the principles of hydroxyl value measurement method according to JIS K 1557, and the iodine value measurement method defined in JIS K 0070, the concentration of the terminal group (sum of hydroxyl value and iodine value) is directly measured, and the number average molecular weight of polymer (A) is determined in consideration of the number of the terminal branches in the structure of polymer (A).

Polymer (A) is preferably a polyoxypropylene having a number average molecular weight of 10,000 - 50,000 and having 1.2 - 6.0 dimethoxymethylsilyl groups or trimethoxymethyl groups on average as reactive silicon group in one molecule.

Polymer (A) is more preferably a polyoxypropylene having a number average molecular weight of 15,000 - 35,000 and having 1.3 - 5.5 dimethoxymethylsilyl groups or trimethoxymethyl groups on average as reactive silicon group in one molecule.

Polymer (A) is further preferably a polyoxypropylene having a number average molecular weight of 20,000 - 30,000 and having 1.5 - 5.0 dimethoxymethylsilyl groups or trimethoxymethyl groups on average as reactive silicon group in one molecule.

### <Polymer (B)>

The (meth)acrylate-based polymer (B) has a reactive silicon group represented by the following formula (2):

-SiX₃ (2)

wherein each X is independently a hydroxy group or a hydrolyzable group (preferably a hydrolyzable group), and the reactive silicon group equivalent is not less than 0.30 mmol/g. In the present invention, "(meth)acryl" shows "acryl and/or methacryl".

To obtain a cured product with high strength, polymer (B) needs to have a reactive silicon group represented by the formula (2) (i.e., silicon group having three X (hydroxy group or hydrolyzable group) on silicon atom). The explanation of the hydrolyzable group is the same as that for polymer (A).

The reactive silicon group represented by the formula (2) may be one kind, or two or more kinds, preferably one kind. Examples of the reactive silicon group represented by the formula (2) include, but are not limited to, trimethoxysilyl group, triethoxysilyl group, tris(2-propenyloxy)silyl group, triacetoxysilyl group and the like. Of these, trimethoxysilyl group is preferable since it shows high activity and a cured product having high strength and high elongation can be obtained.

The monomer constituting (meth)acrylate-based polymer (B) contains (meth)acrylate (hereinafter to be also referred to as "monomer (b)"). That is, polymer (B) contains a constitutional unit derived from monomer (b) (hereinafter to be also referred to as "constitutional unit (b)"). To synthesize polymer (B), only one kind of monomer (b) may be used, or two or more kinds of monomer (b) may be used in combination.

Examples of monomer (b) include alkyl (meth)acrylate such as methyl (meth)acrylate, ethyl (meth)acrylate, n-propyl (meth)acrylate, isopropyl (meth)acrylate, n-butyl (meth)acrylate, isobutyl (meth)acrylate, s-butyl (meth)acrylate, tert-butyl (meth)acrylate, neopentyl (meth)acrylate, n-hexyl (meth)acrylate, n-heptyl (meth)acrylate, 2-ethylhexyl (meth)acrylate, nonyl (meth)acrylate, decyl (meth)acrylate, undecyl (meth)acrylate, lauryl (meth)acrylate, tridecyl (meth)acrylate, tetradecyl (meth)acrylate, hexadecyl (meth)acrylate, stearyl (meth)acrylate, behenyl (meth)acrylate, cyclohexyl (meth)acrylate and the like; hetero atom-containing (meth)acrylate such as 2-methoxyethyl (meth)acrylate, 3-methoxybutyl (meth)acrylate, 2-hydroxyethyl (meth)acrylate, 2-hydroxypropyl (meth)acrylate, ethylene oxide adduct of (meth)acrylic acid, 2,2,2-trifluoroethyl (meth)acrylate, 3,3,3-trifluoropropyl (meth)acrylate, 3,3,4,4,4-pentafluorobutyl (meth)acrylate, 2-perfluoroethyl-2-perfluorobutylethyl (meth)acrylate, trifluoromethyl (meth)acrylate, perfluoroethyl (meth)acrylate, bis(trifluoromethyl)methyl (meth)acrylate, 2-trifluoromethyl-2-perfluoroethylethyl (meth)acrylate, 2-perfluorohexylethyl (meth)acrylate, 2-perfluorodecylethyl (meth)acrylate, 2-perfluorohexadecylethyl (meth)acrylate, dimethylaminoethyl (meth)acrylate, chloroethyl (meth)acrylate, tetrahydrofurfuryl (meth)acrylate, glycidyl (meth)acrylate and the like.

In addition, other monomer copolymerizable with monomer (b) may be used for synthesizing polymer (B), as long as the effect of the invention is not impaired. Examples of other monomer include styrene-based monomers such as styrene, vinyltoluene, α-methylstyrene, chlorostyrene, styrene sulfonic acid and the like; fluorine-containing vinyl monomers such as perfluoroethylene, perfluoropropylene, vinylidene fluoride and the like; maleic acid and a derivative thereof such as maleic acid, maleic anhydride, monoalkyl maleate, dialkyl maleate and the like; fumaric acid and a derivative thereof such as fumaric acid, monoalkyl fumarate, dialkyl fumarate and the like; maleimide-based monomers such as maleimide, methylmaleimide, ethylmaleimide, propylmaleimide, butylmaleimide, hexylmaleimide, octylmaleimide, dodecylmaleimide, stearylmaleimide, phenylmaleimide, cyclohexylmaleimide and the like; vinyl ester-based monomers such as vinyl acetate, vinyl propionate, vinyl pivalate, vinyl benzoate, vinyl cinnamate and the like; olefin-based monomers such as ethylene, propylene and the like; conjugated diene-based monomer such as butadiene, isoprene and the like; (meth)acrylamide; (meth)acrylonitrile; vinyl-based monomers such as vinyl chloride, vinylidene chloride, allyl chloride, allyl alcohol, ethyl vinyl ether, butyl vinyl ether and the like. Only one kind of other monomer may be used, or two or more kinds thereof may be used in combination.

To lower the viscosity of the curable composition, monomer(s) constituting polymer (B) preferably contain(s) not less than 40 wt% of monomer (b1) free of a reactive silicon group, the homopolymer of the monomer having a glass transition temperature of not more than 80°C, in the total monomer. That is, polymer (B1) preferably contains not less than 40 wt% of a constitutional unit derived from monomer (b1) free of a reactive silicon group, the homopolymer of the monomer having a glass transition temperature of not more than 80°C (hereinafter to be also referred to as "constitutional unit (b1)"), in the total constitutional unit. The amount of monomer (b1) in the total monomer (i.e., the amount of constitutional unit (b1) in the total constitutional unit) is more preferably not less than 50 wt%. The glass transition temperature of the aforementioned homopolymer means a glass transition temperature of the homopolymer of monomer (b1), and the glass transition temperature of homopolymer described in POLYMER HANDBOOK-FOURTH EDITION- (J. Brandrup et al.) can be referred to for the numerical value thereof. The monomer (b1) may be only one kind, or two or more kinds.

While the upper limit of the amount of monomer (b1) is not particularly limited, the amount of monomer (b1) in the total monomer constituting polymer (B) is preferably not more than 90 wt%, more preferably not more than 80 wt%.

Examples of the monomer (b1) include alkyl (meth)acrylate such as methyl acrylate, ethyl (meth)acrylate, n-propyl (meth)acrylate, isopropyl (meth)acrylate, n-butyl (meth)acrylate, isobutyl (meth)acrylate, s-butyl (meth)acrylate, tert-butyl (meth)acrylate, neopentyl (meth)acrylate, n-hexyl (meth)acrylate, n-heptyl (meth)acrylate, n-octy1 (meth)acrylate, 2-ethylhexyl (meth)acrylate, n-nonyl (meth)acrylate, decyl (meth)acrylate, undecyl (meth)acrylate, lauryl (meth)acrylate, tridecyl (meth)acrylate, tetradecyl (meth)acrylate, hexadecyl (meth)acrylate, stearyl (meth)acrylate, behenyl (meth)acrylate, cyclohexyl (meth)acrylate and the like; 2-methoxyethyl (meth)acrylate, 3-methoxybutyl (meth)acrylate and the like.

To lower the viscosity of the curable composition, the glass transition temperature of the homopolymer of monomer (b1) is preferably -100°C - 50°C, more preferably -100°C - 80°C, further preferably -70°C - 50°C, particularly preferably -70°C - 40°C. As monomer (b1), alkyl (meth)acrylate, wherein the alkyl has 2 - 6 carbon atoms, is more preferably used. As used herein, the carbon number of alkyl in alkyl (meth)acrylate means that of alkyl group (R) in the alkoxycarbonyl group (RO-CO-).

To obtain a cured product having high strength, monomer(s) constituting polymer (B) preferably contain(s) not less than 20 wt% of monomer (b2) free of a reactive silicon group, the homopolymer of the monomer having a glass transition temperature of not less than -25°C, in the total monomer. That is, polymer (B) preferably contains not less than 20 wt% of a constitutional unit derived from monomer (b2) free of a reactive silicon group, the homopolymer of the monomer having a glass transition temperature of not less than -25°C (hereinafter to be also referred to as "constitutional unit (b2)"), in the total constitutional unit. The amount of monomer (b2) in the total monomer (i.e., the amount of constitutional unit (b2) in the total constitutional unit) is more preferably 30 wt%, further preferably not less than 40 wt%. The glass transition temperature of the aforementioned homopolymer means a glass transition temperature of the homopolymer of monomer (b2), and the glass transition temperature of homopolymer described in POLYMER HANDBOOK-FOURTH EDITION- (J. Brandrup et al.) can be referred to for the numerical value thereof. The monomer (b2) may be only one kind, or two or more kinds.

While the upper limit of the amount of monomer (b2) is not particularly limited, the amount of monomer (b2) in the total monomer constituting polymer (B) is preferably not more than 80 wt%, more preferably not more than 70 wt%.

Examples of the monomer (b2) include methyl (meth)acrylate, ethyl (meth)acrylate, n-propyl methacrylate, isopropyl methacrylate, n-butyl methacrylate, isobutyl methacrylate, s-butyl methacrylate, tert-butyl methacrylate, neopentyl methacrylate, n-hexyl methacrylate, n-heptyl methacrylate and the like.

Since a cured product having high strength can be obtained, alkyl (meth)acrylate wherein the alkyl has 1 - 5 carbon atoms is preferably used as monomer (b2), and at least one selected from the group consisting of methyl (meth)acrylate, ethyl (meth)acrylate, n-butyl methacrylate, isobutyl methacrylate and tert-butyl methacrylate is more preferably used.

A monomer whose homopolymer having a glass transition temperature of -25°C - 80°C (hereinafter to be referred to as "monomer (b1-b2)") is included in the concept of both the aforementioned monomer (b1) and monomer (b2). The amount of monomer (b1-b2) is included in both the monomer (b1) amount and monomer (b2) amount. To lower the viscosity of the curable composition and improve the strength of the obtained cured product, the amount of monomer (b1-b2) in the total monomer constituting polymer (B) (i.e., amount of constitutional unit derived from monomer (b1-b2) in the total constitutional unit of polymer (B)) is preferably 5 - 80 wt%, more preferably 10 - 70 wt%.

In view of the compatibility with polymer (A), the amount of constitutional unit derived from alkyl (meth)acrylate in polymer (B) is preferably not less than 50 wt%, more preferably not less than 70 wt%, preferably not more than 98 wt%, more preferably not more than 95 wt%, in the total constitutional unit.

To enhance compatibility with polymer (A), a monomer constituting polymer (B) preferably contains alkyl (meth)acrylate wherein the alkyl has 1 - 6 carbon atoms (hereinafter to be also referred to as "monomer (b3)"), and alkyl (meth)acrylate wherein the alkyl has 7 - 30 carbon atoms (hereinafter to be also referred to as "monomer (b4)"). That is, polymer (B) preferably contains a constitutional unit derived from monomer (b3) (hereinafter to be also referred to as "constitutional unit (b3)"), and a constitutional unit derived from monomer (b4) (hereinafter to be also referred to as "constitutional unit (b4)"). The total amount of monomer (b3) and monomer (b4) in the total monomer constituting polymer (B) (i.e., the total amount of constitutional unit (b3) and constitutional unit (b4) in the total constitutional unit of polymer (B)) is preferably 50 - 95 wt%, more preferably 60 - 90 wt%. The weight ratio of monomer (b3) and monomer (b4) (monomer (b3):(b4)), i.e., weight ratio of constitutional unit (b3) and constitutional unit (b4) (constitutional unit (b3):constitutional unit (b4)) is preferably 95:5 - 40:60, more preferably 90:10 - 60:40.

Polymer (B) can be obtained by various polymerization methods, and the polymerization method thereof is not particularly limited. From the aspects of general versatility of monomer and easiness of control, a radical polymerization method is preferable.

The radical polymerization method can be classified into "general radical polymerization method" and "controlled radical polymerization method". The "general radical polymerization method" includes simple polymerization using a polymerization initiator such as azo-based compound, peroxide and the like, and is a convenient polymerization method. On the other hand, the "controlled radical polymerization method" can introduce a particular functional group into a controlled position such as terminal and the like. The "controlled radical polymerization method" can be further classified into "chain transfer agent method" and "living radical polymerization method". The "chain transfer agent method" is characterized in that polymerization is performed using a chain transfer agent having a particular functional group, and affords a vinyl-based polymer having a functional group on the terminal. On the other hand, the "living radical polymerization method" is characterized in that the polymer growth terminal grows without causing side reactions such as termination reaction and the like, and a polymer having a molecular weight nearly as designed is obtained. In the present invention, any of these polymerization methods may be used.

The "general radical polymerization method" specifically refers to a solution polymerization method, a bulk polymerization method and the like, wherein a polymerization initiator, a chain transfer agent, a solvent and the like are added and polymerization is performed at 50 - 150°C.

Examples of the polymerization initiator include azo-based compounds such as 2,2'-azobis(2-methylbutyronitrile), dimethyl 2,2'-azobis(2-methylpropionate), 2,2'-azobis(2,4-dimethylvaleronitrile), 2,2'-azobis(4-methoxy-2,4-dimethylvaleronitrile), 2,2'-azobis[N-(2-propenyl)-2-methylpropionamide], 1,1'-azobis(cyclohexane-1-carbonitrile) and the like; diacyl peroxides such as benzoyl peroxide, isobutyryl peroxide, isononanoyl peroxide, decanoyl peroxide, lauroyl peroxide, parachlorobenzoyl peroxide, di(3,5,5-trimethylhexanoyl) peroxide and the like; peroxydicarbonates such as diisopropyl peroxydicarbonate, di-sec-butyl peroxydicarbonate, di-2-ethylhexyl peroxydicarbonate, di-1-methylheptyl peroxydicarbonate, di-3-methoxybutyl peroxydicarbonate, dicyclohexyl peroxydicarbonate and the like; peroxyesters such as tert-butyl peroxybenzoate, tert-butyl peroxyacetate, tert-butyl peroxy-2-ethylhexanoate, tert-butyl peroxyisobutyrate, tert-butyl peroxypivalate, tert-butyl diperoxyadipate, cumyl peroxyneodecanoate and the like; ketone peroxides such as methyl ethyl ketone peroxide, cyclohexanone peroxide and the like; dialkyl peroxides such as di-tert-butyl peroxide, dicumyl peroxide, tert-butyl cumyl peroxide, 1,1-di(tert-hexyl peroxy)-3,3,5-trimethylcyclohexane and the like; hydroperoxides such as cumene hydroxyperoxide, tert-butyl hydroperoxide and the like; peroxides such as 1,1-di(tert-hexyl peroxy)-3,3,5-trimethylcyclohexane and the like, and the like. Only one kind of these polymerization initiators may be used, or two or more kinds thereof may be used in combination.

Examples of the chain transfer agent include mercapto group-containing compounds such as n-dodecyl mercaptan, tert-dodecyl mercaptan, lauryl mercaptan and the like. When a reactive silicon group is desired to be introduced into a molecular chain terminal of a (meth)acrylic polymer, for example, a compound having a reactive silicon group and a mercapto group, such as 3-mercaptopropyltrimethoxysilane, 3-mercaptopropylmethyldimethoxysilane, 3-mercaptopropylchloromethyldimethoxysilane, 3-mercaptopropylmethoxymethyldimethoxysilane, (mercaptomethyl)dimethoxymethylsilane, (mercaptomethyl)trimethoxysilane and the like is preferably used. Only one kind of these may be used, or two or more kinds thereof may be used in combination. When a cured product superior in weather resistance is desired, use of a mercapto group-containing compound is preferably avoided during polymerization.

Examples of the solvent include aromatic compounds such as toluene, xylene, styrene, ethylbenzene, paradichlorobenzene, di-2-ethylhexyl phthalate, di-n-butyl phthalate and the like; hydrocarbon compounds such as hexane, heptane, octane, cyclohexane, methylcyclohexane and the like; carboxylate compounds such as butyl acetate, n-propyl acetate, isopropyl acetate and the like; ketone compounds such as methyl isobutyl ketone, methyl ethyl ketone and the like; dialkyl carbonate compounds such as dimethyl carbonate, diethyl carbonate and the like; alcohol compounds such as n-propanol, 2-propanol, n-butanol, 2-butanol, isobutanol, tert-butanol, amyl alcohol and the like, and the like. Of these, one or more kinds selected from a dialkyl carbonate compound and an alcohol compound are preferable in terms of odor, environmental burden and the like. Dimethyl carbonate, n-propanol, 2-propanol, n-butanol, 2-butanol, isobutanol, tert-butanol are more preferable, 2-propanol and isobutanol are further preferable, since boiling point and emission of all volatile organic compounds from the composition by the measurement method described in GEV Specification and Classification Criteria, February 14, 2001 version prescribed by GEV (Gemeinschaft Emissionskontrollierte Verlegewerkstoffe, e.V.) can be suppressed.

For the synthesis of polymer (B), the monomer of polymer (B) can also be polymerized together with polymer (A) and a precursor compound thereof, the below-mentioned plasticizer and the like.

As compared to the "general radical polymerization method", the "chain transfer agent method" is a polymerization method capable of quantitatively introducing a functional group into a polymer terminal. The radical polymerization using a chain transfer agent is not particularly limited and examples thereof include a method of obtaining a polymer having a halogen terminal by using halogenated hydrocarbon as a chain transfer agent, as shown in JP-A-4-132706, a method of obtaining a polymer having a hydroxy group terminal by using hydroxy group-containing mercaptan or hydroxy group-containing polysulfide and the like as a chain transfer agent, as shown in JP-A-61-271306, JP-B-2594402, JP-A-54-47782, and the like.

The "living radical polymerization method" is, different from the aforementioned polymerization method, a polymerization method capable of affording a polymer having any molecular weight, narrow molecular weight distribution, and low viscosity, and further, capable of introducing a monomer having a particular functional group into almost any position of the polymer. In a narrow sense, the living polymerization refers to polymerization wherein the terminal is always active and the molecular chain keeps growing. In general, it also includes quasiliving polymerization wherein inactivated terminal and activated terminal in an equilibrium state keep growing.

The "living radical polymerization method" includes, for example, one using a cobalt porphyrin complex as shown in Journal of the American Chemical Society (J. Am. Chem. Soc.), 1994, vol. 16, p. 7943, one using nitrooxide radical as shown in JP-A-2003-500378, atom transfer radical polymerization (ATRP method) using organic halide, halogenated sulfonyl compound and the like as an initiator, and transition metal complex as a catalyst, as shown in JP-A-11-130931, and the like. In the present invention, what is called a reverse atom transfer radical polymerization, as shown in Macromolecules, 1999, vol. 32, p. 2872, that is, a polymerization method producing a highly oxidized state when a general atom transfer radical polymerization catalyst has generated radical (e.g., equilibrium state similar to atom transfer radical polymerization, produced by reacting a general radical initiator such as peroxide and the like with Cu(II) when Cu(I) is used as a catalyst) is also included in the atom transfer radical polymerization.

As a polymerization method other than these, a method of obtaining an acrylic polymer by using a metallocene catalyst and a thiol compound having at least one reactive silicon group in a molecule, as shown in JP-A-2001-040037, a high temperature continuous polymerization method including continuously polymerizing a vinyl monomer in a stirring vessel type reactor, as shown in JP-A-57-502171, JP-A-59-006207, JP-A-60-511992 and the like, can also be used.

A method of introducing a reactive silicon group into a (meth)acrylate-based polymer is not particularly limited and, for example, the following methods (I) - (IV) can be used.
(I) A method of copolymerizing a compound having a polymerizable unsaturated bond and a reactive silicon group with (meth)acrylate.
(II) A method of copolymerizing (meth)acrylate in the presence of the aforementioned compound having a reactive silicon group and a mercapto group as a chain transfer agent.
(III) A method comprising copolymerizing a compound having a polymerizable unsaturated bond and a reactive functional group (Z group) (e.g., acrylic acid, 2-hydroxyethyl acrylate) with (meth)acrylate free of Z group, and reacting same with a compound having a reactive silicon group and a functional group reactive with the Z group (e.g., isocyanate silane compound).
(IV) A method comprising copolymerizing (meth)acrylate by a living radical polymerization method, and introducing a reactive silicon group into a molecular chain terminal.

These methods can be used in any combination.

It is preferable to use the above-mentioned methods (I) and (II) in combination, since a reactive silicon group can be introduced into both the molecular chain terminal and the side chain. In addition, the above-mentioned method (IV) is preferable since a polymer having any molecular weight, narrow molecular weight distribution, and low viscosity can be obtained.

Examples of the compound having a reactive silicon group and a mercapto group include 3-mercaptopropyltrimethoxysilane, mercaptomethyltrimethoxysilane, 3-mercaptopropyltriethoxysilane, mercaptomethyltriethoxysilane and the like. Examples of the compound having a polymerizable unsaturated bond and a reactive silicon group include a compound having a (meth)acryloxy group and a reactive silicon group, such as 3-(meth)acryloxypropyltrimethoxysilane, 3-(meth)acryloxypropyltriethoxysilane, (meth)acryloxymethyltrimethoxysilane, 3-(meth)acryloxypropyldimethoxymethylsilane, (meth)acryloxymethyldimethoxymethylsilane and the like; a compound having a vinyl group and a reactive silicon group, such as vinyltrimethoxysilane, vinyltriethoxysilane and the like, and the like. Only one kind of these may be used, or two or more kinds thereof may be used in combination.

While the reactive silicon group in polymer (B) may be introduced into any of a molecular chain terminal and a side chain, it is preferably introduced into both the molecular chain terminal and the side chain from the aspect of adhesiveness. To obtain a cured product having high strength, the number of reactive silicon groups in one molecule of polymer (B) is preferably not less than 1.0, more preferably not less than 1.3, further preferably not less than 1.5, and preferably not more than 8.0, more preferably not more than 7.0, further preferably not more than 6.0, on average. The reactive silicon group equivalent of polymer (B) is preferably not less than 0.30 mmol/g, more preferably not less than 0.35 mmol/g, further preferably not less than 0.40 mmol/g, and preferably not more than 3.0 mmol/g, more preferably not more than 2.5 mmol/g, further preferably not more than 2.0 mmol/g. As used herein, the reactive silicon group equivalent means the amount (mmol) of a reactive silicon group contained per weight (g) of the polymer (B), and can be calculated from the amount of a monomer having a reactive silicon group to be added.

The molecular weight of polymer (B) is not particularly limited. To obtain a cured product having higher strength, the molecular weight of polymer (B) is preferably high. When high-molecular weight polymer (B1) is used, the number average molecular weight thereof is preferably not less than 4,000, more preferably not less than 6,000, further preferably not less than 8,000, and preferably not more than 100,000, more preferably not more than 50,000, further preferably not more than 30,000, by GPC (based on polystyrene). When high-molecular weight polymer (B1) is used, a monomer synthesizing same is not particularly limited; however, to obtain a curable composition having low viscosity, a monomer having a low glass transition temperature is preferably used.

The high-molecular weight polymer (B1) is preferably poly(meth)acrylate having a trimethoxymethyl group as a reactive silicon group, a reactive silicon group equivalent of 0.30 - 3.0 mmol/g, a number average molecular weight of 4,000 - 100,000, 50 - 95 wt% as the total amount of monomer (b3) and monomer (b4) in the total monomer constituting polymer (B), and a weight ratio of monomer (b3) and monomer (b4) (monomer (b3) :monomer (b4)) of 95:5 - 40:60.

The high-molecular weight polymer (B1) is more preferably poly(meth)acrylate having a trimethoxymethyl group as a reactive silicon group, a reactive silicon group equivalent of 0.35 - 2.5 mmol/g, a number average molecular weight of 6,000 - 50,000, 60 - 90 wt% as the total amount of monomer (b3) and monomer (b4) in the total monomer constituting polymer (B), and a weight ratio of monomer (b3) and monomer (b4) (monomer (b3):monomer (b4)) of 90:10 - 60:40.

The high-molecular weight polymer (B1) is further preferably poly(meth)acrylate having a trimethoxymethyl group as a reactive silicon group, a reactive silicon group equivalent of 0.42 - 2.0 mmol/g, a number average molecular weight of 8,000 - 30,000, 60 - 90 wt% as the total amount of monomer (b3) and monomer (b4) in the total monomer constituting polymer (B), and a weight ratio of monomer (b3) and monomer (b4) (monomer (b3):monomer (b4)) of 90:10 - 60:40.

To lower the viscosity of the curable composition and obtain a cured product having high strength, the molecular weight of polymer (B) is preferably low. When low-molecular weight polymer (B2) is used, the number average molecular weight thereof is preferably not less than 400, more preferably not less than 500, further preferably not less than 1,000, particularly preferably not less than 1,500, and preferably less than 4,000, more preferably not more than 3,000, by GPC (based on polystyrene). The monomer(s) constituting low-molecular weight polymer (B2) contain(s) monomer (b2) whose homopolymer has a glass transition temperature of not less than -25°C in a proportion of preferably not less than 20 wt%, more preferably not less than 30 wt%, further preferably not less than 40 wt%, in the total monomer. When the amount of a monomer whose homopolymer has a glass transition temperature of less than -25°C is high, the obtained cured product sometimes has insufficient strength.

The low-molecular weight polymer (B2) is preferably poly(meth)acrylate having a trimethoxymethyl group as a reactive silicon group, a reactive silicon group equivalent of 0.30 - 3.0 mmol/g, a number average molecular weight of not less than 1,000 and less than 4,000, 50 - 95 wt% as the total amount of monomer (b3) and monomer (b4) in the total monomer constituting polymer (B), and a weight ratio of monomer (b3) and monomer (b4) (monomer (b3):monomer (b4)) of 95:5 - 40:60.

The low-molecular weight polymer (B1) is more preferably poly(meth)acrylate having a trimethoxymethyl group as a reactive silicon group, a reactive silicon group equivalent of 0.35 - 2.5 mmol/g, a number average molecular weight of 1,500 - 3,000, 60 - 90 wt% as the total amount of monomer (b3) and monomer (b4) in the total monomer constituting polymer (B), and a weight ratio of monomer (b3) and monomer (b4) (monomer (b3):monomer (b4)) of 90:10 - 60:40.

The low-molecular weight polymer (B1) is further preferably poly(meth)acrylate having a trimethoxymethyl group as a reactive silicon group, a reactive silicon group equivalent of 0.40 - 2.0 mmol/g, a number average molecular weight of 1,500 - 3,000, 60 - 90 wt% as the total amount of monomer (b3) and monomer (b4) in the total monomer constituting polymer (B), and a weight ratio of monomer (b3) and monomer (b4) (monomer (b3):monomer (b4)) of 90:10 - 60:40.

While the weight ratio of polymer (A) and polymer (B) is not particularly limited, polymer (A): polymer (B) is preferably 90:10 - 30:70, more preferably 85:15 - 40:60, further preferably 80:20 - 50:50. The total content of polymer (A) and polymer (B) in the curable composition is preferably 30 - 90 wt%, more preferably 50 - 80 wt%.

### <High-molecular weight plasticizer (C)>

The curable composition of the present invention contains high-molecular weight plasticizer (C) having 0 - 1 reactive silicon group on average in one molecule. The viscosity of the curable composition and elongation of a cured product can be adjusted by the addition of high-molecular weight plasticizer (C) .

The curable composition of the present invention optionally contains a low-molecular weight plasticizer in addition to high-molecular weight plasticizer (C). However, use of a low-molecular weight plasticizer alone as a plasticizer is not preferable since the tensile property of a cured product decreases markedly. In the present invention, the high-molecular weight plasticizer (C) means a plasticizer having a number average molecular weight of not less than 500, and the low-molecular weight plasticizer means a plasticizer having a number average molecular weight of less than 500.

The number average molecular weight of the high-molecular weight plasticizer (C) is not less than 1,000, preferably not less than 1,500, particularly preferably not less than 2,000, and preferably not more than 15,000, preferably not more than 10,000, further preferably not more than 8,000, by GPC (based on polystyrene). When the number average molecular weight is too low, high-molecular weight plasticizer (C) flows out over time from a cured product due to heat and rainfall, and the initial property cannot be maintained for a long term. When the number average molecular weight is too high, viscosity of the curable composition becomes high to degrade workability.

While the molecular weight distribution (Mw/Mn) of the high-molecular weight plasticizer (C) is not particularly limited, it is preferably narrow, more preferably less than 1.80, still more preferably not more than 1.70, further preferably not more than 1.60, still more preferably not more than 1.50, particularly preferably not more than 1.40, most preferably not more than 1.30.

Examples of the high-molecular weight plasticizer (C) include, but are not limited to, polyoxyalkylene; (meth)acrylate-based polymer; polyalkylene glycol ester such as diethylene glycol dibenzoate, triethylene glycol dibenzoate, pentaerythritol ester and the like; polyester obtained from dibasic acid sebacic acid, adipic acid, azelaic acid, phthalic acid and the like and divalent alcohol such as ethylene glycol, diethylene glycol, triethylene glycol, propylene glycol, dipropylene glycol and the like; polyether wherein a hydroxy group of polyetherpolyol is urethanated (e.g., trade name: LBU-25 (manufactured by Sanyo Chemical Industries, Ltd.)), polyether esterified by carboxylic acid, polyether having an etherified terminal; polystyrene such as polystyrene, poly-α-methylstyrene and the like; polybutadiene, polybutene, polyisobutylene, butadiene-acrylonitrile, polychloroprene and the like.

The high-molecular weight plasticizer (C) is preferably compatible with polymer (A) and polymer (B). From this point, the high-molecular weight plasticizer (C) is preferably an oxyalkylene-based polymer or a (meth)acrylate-based polymer. The explanation on oxyalkylene-based polymer and (meth) acrylate-based polymer is the same as that for polymer (A) and polymer (B).

Use of an oxyalkylene-based polymer as the high-molecular weight plasticizer (C) is preferable, since surface curability and depth curability are improved, and curing retardation after storage does not occur. Of the oxyalkylene-based polymers, polyoxypropylene is more preferable. An oxyalkylene-based polymer free of a hydroxy group on the terminal is preferably used, since a decrease in the strength due to the addition of a plasticizer can be suppressed.

From the aspects of compatibility, weather resistance and heat resistance, a (meth)acrylate-based polymer is preferably used as the high-molecular weight plasticizer (C). Of the (meth)acrylate-based polymers, poly(alkyl (meth)acrylate) is more preferable. As the synthesis method of the (meth)acrylate-based polymer, a living radical polymerization method is preferable, and an atom transfer radical polymerization method is more preferable, since the molecular weight distribution can be narrowed and low viscosity can be achieved. In addition, continuous bulk polymerization of alkyl (meth)acrylate at a high temperature and high pressure, so-called SGO process, described in JP-A-2001-207157, is also preferable.

The high-molecular weight plasticizer (C) is a high-molecular weight plasticizer (C1) having more than 0 and not more than one reactive silicon group on average in one molecule. Also disclosed is a high-molecular weight plasticizer (C2) free of a reactive silicon group, or a mixture of these. Examples of the reactive silicon group include a reactive silicon group represented by the formula (1). While the reactive silicon groups of polymer (A) and high-molecular weight plasticizer (C) may be different, they are preferably the same since a cured product having good elongation is obtained. When high-molecular weight plasticizer (C) has a reactive silicon group, the number of the reactive silicon groups in one molecule is preferably not less than 0.3, more preferably not less than 0.5, further preferably not less than 0.6, on average. When the number of the reactive silicon group is less than 0.3, high strength of a cured product, which is the effect of the reactive silicon group, may not be obtained sufficiently. On the other hand, when the number of the reactive silicon groups is higher than 1, a cured product having high elongation may not be obtained.

The high-molecular weight plasticizer (C) having a reactive silicon group can be produced by the synthesis method of a polymer exemplified for polymer (A) and polymer (B), a reactive silicon group introduction method, or other known method.

The content of the high-molecular weight plasticizer (C) is preferably 5 - 200 parts by weight, more preferably 10 - 150 parts by weight, particularly preferably 20 - 100 parts by weight, per 100 parts by weight of the total content of polymer (A) and polymer (B) . When the content is less than 5 parts by weight, the effect of the high-molecular weight plasticizer (C) may not be developed sufficiently, and when it exceeds 200 parts by weight, the mechanical strength of a cured product is sometimes insufficient.

The content of the high-molecular weight plasticizer (C), which is the high-molecular weight plasticizer (C1) having more than 0 and not more than one reactive silicon group on average in one molecule, is preferably not less than 5 parts by weight, more preferably not less than 10 parts by weight, further preferably not less than 20 parts by weight, and preferably not more than 200 parts by weight, more preferably not more than 150 parts by weight, further preferably not more than 100 parts by weight, per 100 parts by weight of the total content of polymer (A) and polymer (B).

As disclosed herein, the content of the high-molecular weight plasticizer (C), which is high-molecular weight plasticizer (C2) free of a reactive silicon group, is preferably not less than 5 parts by weight, more preferably not less than 10 parts by weight, further preferably not less than 20 parts by weight, and preferably not more than 200 parts by weight, more preferably not more than 150 parts by weight, further preferably not more than 100 parts by weight, per 100 parts by weight of the total content of polymer (A) and polymer (B).

As high-molecular weight plasticizer (C), high-molecular weight plasticizer (C1) having a reactive silicon group and high-molecular weight plasticizer (C2) free of a reactive silicon group may be used in combination. Since a cured product superior in the workability and mechanical property can be obtained, a high-molecular weight plasticizer having a reactive silicon group and a high-molecular weight plasticizer free of a reactive silicon group are preferably used in combination.

When high-molecular weight plasticizer (C) comprises high-molecular weight plasticizer (C1) having more than 0 and not more than one reactive silicon group on average in one molecule and high-molecular weight plasticizer (C2) free of a reactive silicon group, the total content thereof is preferably not less than 5 parts by weight, more preferably not less than 10 parts by weight, further preferably not less than 20 parts by weight, and preferably not more than 200 parts by weight, more preferably not more than 150 parts by weight, further preferably not more than 100 parts by weight, and the weight ratio thereof (high-molecular weight plasticizer (C1):high-molecular weight plasticizer (C2)) is preferably 90:10 - 20:80, more preferably 85:15 - 40:60, further preferably 80:20 - 50:50.

As disclosed herein, the high-molecular weight plasticizer (C) preferably comprises high-molecular weight plasticizer (C1) which is polyoxypropylene or poly(meth)acrylate having a number average molecular weight of 500 - 15,000 and 0.3 - 1 reactive silicon group on average in one molecule, and/or high-molecular weight plasticizer (C2) which is polyoxypropylene or poly(meth)acrylate free of a reactive silicon group and having a number average molecular weight of 500 - 15,000.

The high-molecular weight plasticizer (C) more preferably comprises high-molecular weight plasticizer (C1) which is polyoxypropylene or poly(meth)acrylate having a number average molecular weight of 1,000 - 10,000 and 0.5 - 1 reactive silicon group on average in one molecule, optionally in combination with high-molecular weight plasticizer (C2) which is polyoxypropylene or poly(meth)acrylate free of a reactive silicon group and having a number average molecular weight of 1,000 - 10,000. As disclosed herein, this plasticizer (C2) can be used alone.

The high-molecular weight plasticizer (C) further preferably comprises high-molecular weight plasticizer (C1) which is polyoxypropylene or poly(meth)acrylate having a number average molecular weight of 2,000 - 8,000 and 0.6 - 1 reactive silicon group on average in one molecule, and high-molecular weight plasticizer (C2) which is polyoxypropylene or poly(meth)acrylate free of a reactive silicon group and having a number average molecular weight of 2,000 - 8,000, wherein the weight ratio of high-molecular weight plasticizer (C1) and high-molecular weight plasticizer (C2) (high-molecular weight plasticizer (C1):high-molecular weight plasticizer (C2)) is 80:20 - 50:50

### <Other components>

The curable composition of the present invention optionally contains components other than the aforementioned polymer (A), polymer (B) and high-molecular weight plasticizer (C) (other components) as long as the effect of the invention is not inhibited. Other components are explained below.

The curable composition of the present invention may contain a low-molecular weight plasticizer. Specific examples of the low-molecular weight plasticizer include phthalate compounds such as dibutyl phthalate, diisononyl phthalate (DINP), diheptyl phthalate, di(2-ethylhexyl) phthalate, diisodecyl phthalate (DIDP), butyl benzyl phthalate and the like; terephthalate compounds such as bis(2-ethylhexyl)-1,4-benzenedicarboxylate and the like (specifically, trade name: EASTMAN168 (manufactured by EASTMAN CHEMICAL)); non-phthalate compounds such as diisononyl 1,2-cyclohexanedicarboxylate and the like (specifically, trade name: Hexamoll DINCH (manufactured by BASF)); polyvalent aliphatic carboxylate compounds such as dioctyl adipate, dioctyl sebacate, dibutyl sebacate, diisodecyl succinate, tributyl acetylcitrate and the like; unsaturated fatty acid ester compounds such as butyl oleate, methyl acetylricinoleate and the like; phenyl alkylsulfonate (specifically, trade name: Mesamoll (manufactured by LANXESS)); phosphate compounds such as tricresyl phosphate, tributyl phosphate and the like; trimellitate compound; chlorinated paraffin; hydrocarbon-based oil such as alkyl diphenyl, partially hydrogenated terphenyl and the like; epoxy plasticizer such as epoxydized soybean oil, benzyl epoxystearate and the like, and the like.

When a low-molecular weight plasticizer is used, the content thereof is preferably 5 - 150 parts by weight, more preferably 10 - 120 parts by weight, particularly preferably 20 - 100 parts by weight, per 100 parts by weight of the total content of polymer (A) and polymer (B). When the content is less than 5 parts by weight, the effect of the low-molecular weight plasticizer is not developed, and when it exceeds 150 parts by weight, the mechanical strength of a cured product is sometimes insufficient. Only one kind of low-molecular weight plasticizer may be used, or two or more kinds thereof may be used in combination. When a curable composition is desired to develop high strength, use of a low-molecular weight plasticizer is desirably avoided.

The curable composition of the present invention can contain a solvent or a diluent. While the solvent and diluent are not particularly limited, aliphatic hydrocarbon, aromatic hydrocarbon, alicyclic hydrocarbon, halogenated hydrocarbon, alcohol, ester, ketone, ether and the like can be used. When the solvent or diluent is used, the boiling point of the solvent is preferably not less than 150°C, more preferably not less than 200°C, particularly preferably not less than 250°C, in view of the problem of air pollution during indoor use of the composition. Only one kind of the above-mentioned solvent and diluent may be used, or two or more kinds thereof may be used in combination.

In the curable composition of the present invention, a curing catalyst may be used for curing polymers (A) and (B). Specific examples the curing catalyst include, but are not limited to, titanium compounds such as tetrabutyl titanate, tetrapropyl titanate, titanium tetrakis(acetylacetonate), bis(acetylacetonate)diisopropoxytitanium, diisopropoxytitanium bis(ethylacetoacetate) and the like; dibutyltin-based compounds such as dibutyltin dilaurate, dibutyltin maleate, dibutyltin phthalate, dibutyltin dioctanoate, dibutyltin bis(2-ethylhexanoate), dibutyltin bis(methylmaleate), dibutyltin bis(ethylmaleate), dibutyltin bis(butylmaleate), dibutyltin bis(octylmaleate), dibutyltin bis(tridecylmaleate), dibutyltin bis(benzylmaleate), dibutyltin diacetate, dibutyltin dimethoxide, dibutyltin bis(nonylphenoxide), dibutenyltin oxide, dibutyltin oxide, dibutyltin bis(acetylacetonate), dibutyltin bis(ethylacetoacetonate), reaction product of dibutyltin oxide and silicate compound, reaction product of dibutyltin oxide and phthalate and the like; dioctyltin-based compounds such as dioctyltin bis(triethoxysilicate), dioctyltin bis(ethylmaleate), dioctyltin bis(octylmaleate), dioctyltin dilaurate, dioctyltin diacetate, dioctyltin bis(acetylacetonate) and the like; organotin compounds (excluding dibutyltin-based compound and dioctyltin-based compound) such as dimethyltin diacetate, dimethyltin bis(acetylacetonate) and the like; organic aluminum compounds such as aluminum tris(acetylacetonate), aluminum tris(ethylacetoacetate), diisopropoxyaluminum ethylacetoacetate and the like; zirconium compounds such as zirconium tetrakis (acetylacetonate) and the like; carboxylic acid such as 2-ethylhexanoic acid, octylic acid, neodecanoic acid, oleic acid, naphthenic acid and the like; metal carboxylate such as tin carboxylate such as tin bisneodecanoate, tin bis(2-ethylhexanoate) and the like, lead carboxylate, bismuth carboxylate, potassium carboxylate, calcium carboxylate, barium carboxylate, titanium carboxylate, zirconium carboxylate, hafnium carboxylate, vanadium carboxylate, manganese carboxylate, iron carboxylate, cobalt carboxylate, nickel carboxylate and cerium carboxylate and the like; boron trifluoride complex such as boron trifluoride, boron trifluoride diethylether complex, boron trifluoride ethylamine complex and the like; fluorine anion-containing compounds such as ammonium fluoride, tetrabutylammonium fluoride, potassium fluoride, cesium fluoride, hydrogen fluoride ammonium, 1,1,2,3,3,3-hexafluoro-1-diethylaminopropane (MEC81, common name, Ishikawa reagent), potassium hexafluorophosphate, Na₂SiF₆, K₂SiF₆, (NH₄)₂SiF₆ and the like, and the like. Of these, dibutyltin-based compound, dioctyltin-based compound, tin carboxylate and carboxylic acid are preferable, since a cured product having high strength and elongation can be obtained. Dioctyltin-based compound, tin carboxylate and carboxylic acid are more preferable since toxicity is low.

When a curing catalyst is used, the content thereof is preferably about 0.01 - 10 parts by weight, more preferably 0.1 - 5 parts by weight, per 100 parts by weight of the total content of polymer (A) and polymer (B) . Due to the surge of environmental problems in recent years, the amount of tin-based compounds to be used is being limited. Therefore, when a tin-based compound is used, the content thereof is preferably less than 1 part by weight.

The curable composition of the present invention can contain a silane coupling agent, a reaction product of a silane coupling agent and the like as an adhesiveness-imparting agent.

Specific examples of the silane coupling agent include isocyanate group-containing silanes such as γ-isocyanatepropyltrimethoxysilane, γ-isocyanatepropyltriethoxysilane, γ-isocyanatepropylmethyldiethoxysilane, γ-isocyanatepropylmethyldimethoxysilane, α-isocyanatemethyltrimethoxysilane, α-isocyanatemethyldimethoxymethylsilane and the like; amino group-containing silanes such as γ-aminopropyltrimethoxysilane, γ-aminopropyltriethoxysilane, γ-aminopropylmethyldimethoxysilane, γ-aminopropylmethyldiethoxysilane, N-β-aminoethyl-γ-aminopropyltrimethoxysilane, N-β-aminoethyl-γ-aminopropylmethyldimethoxysilane, N-β-aminoethyl-γ-aminopropyltriethoxysilane, N-β-aminoethyl-γ-aminopropylmethyldiethoxysilane, γ-ureidopropyltrimethoxysilane, N-phenyl-γ-aminopropyltrimethoxysilane, N-benzyl-γ-aminopropyltrimethoxysilane, N-vinylbenzyl-γ-aminopropyltriethoxysilane, (aminomethyl) dimethoxymethylsilane, (aminomethyl)trimethoxysilane, (phenylaminomethyl)dimethoxymethylsilane, (phenylaminomethyl)trimethoxysilane, bis(3-trimethoxysilylpropyl)amine, N-(2-aminoethyl)-3-aminopropyltrimethoxysilane and the like; mercapto group-containing silanes such as γ-mercaptopropyltrimethoxysilane, γ-mercaptopropyltriethoxysilane, γ-mercaptopropylmethyldimethoxysilane, γ-mercaptopropylmethyldiethoxysilane and the like; epoxy group-containing silanes such as γ-glycidoxy propyltrimethoxysilane, γ-glycidoxy propyltriethoxysilane, γ-glycidoxy propylmethyldimethoxysilane, β-(3,4-epoxycyclohexyl)ethyltrimethoxysilane, β-(3,4-epoxycyclohexyl)ethyltriethoxysilane and the like; carboxy silanes such as β-carboxyethyltriethoxysilane, β-carboxyethylphenylbis(β-methoxyethoxy)silane, N-β-(carboxymethyl)aminoethyl-γ-aminopropyltrimethoxysilane and the like; vinyl unsaturated group-containing silanes such as vinyltrimethoxysilane, vinyltriethoxysilane, γ-methacryloyloxypropylmethyldimethoxysilane, γ-acryloyloxypropyltriethoxysilane and the like; halogen-containing silanes such as γ-chloropropyltrimethoxysilane and the like; isocyanurate silanes such as tris(trimethoxysilyl)isocyanurate and the like; carbamate silanes such as methyl(N-dimethoxymethylsilylmethyl)carbamate, methyl(N-trimethoxysilylmethyl)carbamate, methyl(N-dimethoxymethylsilylpropyl)carbamate, methyl(N-trimethoxysilylpropyl)carbamate and the like; alkoxy group-containing silanes such as (methoxymethyl)dimethoxymethylsilane, (methoxymethyl)trimethoxysilane, (ethoxymethyl)trimethoxysilane, (phenoxymethyl)trimethoxysilane and the like; acid anhydride-containing silanes such as 3-(trimethoxysilyl)propylsuccinic anhydride, 3-(triethoxysilyl)propylsuccinic anhydride and the like, and the like. In addition, partially condensed products of these, and modified derivatives thereof such as amino-modified silyl polymer, silylated amino polymer, unsaturated aminosilane complex, phenylamino long-chain alkyl silane, aminosilylated silicone, silylated polyester and the like can also be used as silane coupling agents. Only one kind of these silane coupling agents may be used, or two or more kinds thereof may be used in combination. Examples of the reaction product of the silane coupling agent include a reaction product of isocyanate silane and a hydroxy group-containing compound or an amino group-containing compound; Michael addition reaction product of aminosilane; a reaction product of aminosilane and an epoxy group-containing compound, a reaction product of epoxysilane and a carboxy group-containing compound, and amino group-containing compound and the like.

When a silane coupling agent or a reaction product is used, the content thereof is preferably 0.1 - 20 parts by weight, more preferably 0.5 - 10 parts by weight, per 100 parts by weight of the total content of polymer (A) and polymer (B).

Specific examples of the adhesiveness-imparting agent other than the silane coupling agent or a reaction product thereof include, but are not particularly limited to, epoxy resin, phenol resin, sulfur, alkyl titanates, aromatic polyisocyanate and the like. The above-mentioned adhesiveness-imparting agent may be used alone, or two or more kinds thereof may be used in combination. By adding these adhesiveness-imparting agents, the adhesiveness of a cured product to an adherend can be improved.

In addition, the curable composition of the present invention can contain silicate. The silicate acts as a crosslinking agent and has a function to improve recovery property, durability, and creep resistance of a cured product obtained from the curable composition of the present invention. Furthermore, silicate also has an effect to improve the adhesiveness and water-resistant adhesiveness, as well as adhesion durability under high temperature and high humidity conditions of a cured product. As silicate, tetraalkoxysilane and alkylalkoxysilane or a partially hydrolyzed condensate thereof can be used.

Examples of silicate include tetraalkoxysilanes (tetraalkyl silicates) and a partially hydrolyzed condensate thereof such as tetramethoxysilane, tetraethoxysilane, ethoxytrimethoxysilane, dimethoxydiethoxysilane, methoxytriethoxysilane, tetra-n-propoxysilane, tetra-i-propoxysilane, tetra-n-butoxy silane, tetra-i-butoxysilane, tetra-t-butoxysilane and the like, and the like.

The partially hydrolyzed condensate of tetraalkoxysilane is preferable since it shows a greater improvement effect on the resilience, durability and creep resistance of a cured product than with tetraalkoxysilane. As the aforementioned partially hydrolyzed condensate of tetraalkoxysilane, for example, one obtained by adding water to tetraalkoxysilane to allow partial hydrolysis and then condensation thereof by a conventional method can be mentioned as an example. In addition, as the partially hydrolyzed condensate of organosilicate compound, a commercially available product can be used. As such condensates, for example, methyl silicate 51, ethyl silicate 40 (both manufactured by COLCOAT CO., LTD.) and the like can be mentioned as examples.

When silicate is used, the content thereof is preferably 0.1 - 20 parts by weight, more preferably 0.5 - 10 parts by weight, per 100 parts by weight of the total content of polymer (A) and polymer (B).

The curable composition of the present invention can contain one or more kinds of filler. When a filler is used, the content thereof is preferably 1 - 300 parts by weight, more preferably 10 - 200 parts by weight, per 100 parts by weight of the total content of polymer (A) and polymer (B).

Examples of the filler include fumed silica, precipitated silica, crystal silica, molten silica, dolomite, silicic anhydride, hydrous silicate, aluminum hydroxide, carbon black, hollow alumina silica fine particles (e.g., trade name: PANSIL UltraSpheres (manufactured by TOLSA)), heavy calcium carbonate, colloidal calcium carbonate, magnesium carbonate, diatomite, sintered clay, clay, talc, kaolinite, sillitin, titanium oxide, bentonite, organic bentonite, ferric oxide, aluminum fine powder, flint powder, zinc oxide, activated zinc oxide, resin powder such as PVC powder, PMMA1 powder and the like, fiber filler such as asbestos, glass fiber, and filament and the like. As used herein, heavy calcium carbonate means calcium carbonate produced by pulverization and classification, and colloidal calcium carbonate means calcium carbonate produced by a carbon dioxide gas chemical combination method.

The filler can be dried in advance by dehydration including, as described in JP-A-2001-181532, uniformly mixing the filler with a dehydrating agent such as oxidation calcium and the like, sealing the mixture in a bag made of an air-tight material, and leaving the bag for a suitable time period. Using this dried filler, the storage stability of particularly a one-component curable composition can be improved.

In addition, when a highly transparent curable composition is to be obtained, a polymer powder made from a polymer such as poly(methyl methacrylate) and the like as a starting material, amorphous silica and the like can be used as a filler, as described in JP-A-11-302527. Furthermore, as described in JP-A-2000-38560, using hydrophobic silica which is a silicon dioxide fine powder having a hydrophobic group bonded on its surface and the like as a filler, a highly transparent curable composition can be obtained. While the surface of the silicon dioxide fine powder generally has a silanol group (-SiOH), by reacting the silanol group with an organic silicon halide, alcohol and the like, (-SiO-hydrophobic group) is produced to give hydrophobic silica. Examples of the hydrophobic silica include one wherein the silanol group present on the surface of silicon dioxide fine powder is reacted with dimethylsiloxane, hexamethyldisilazane, dimethyldichlorosilane, trimethoxyoctylsilane, trimethylsilane and the like to form a bond. The silicon dioxide fine powder having a surface formed by silanol group (-SiOH) is called hydrophilic silica fine powder.

When a cured product with a highly strength is desired, a filler mainly selected from fumed silica, precipitated silica, crystal silica, molten silica, dolomite, silicic anhydride, hydrous silicate, carbon black, aluminum hydroxide, heavy calcium carbonate, sintered clay, clay, titanium oxide, hollow alumina silica fine particles, kaolinite, sillitin, activated zinc oxide and the like is preferably used. When the aforementioned filler is used, the content thereof is preferably 1 - 200 parts by weight per 100 parts by weight of the total content of polymer (A) and polymer (B).

In general, calcium carbonate having a greater specific surface area shows greater improving effect on the tensile strength at break, elongation at break and adhesiveness of the cured product. Therefore, when heavy calcium carbonate is used as a filler, the average primary particle size thereof is preferably less than 3 µm, more preferably less than 2 pm, most preferably less than 1 µm. On the other hand, the average primary particle size is preferably not less than 0.05 µm. The average primary particle size is an average of the values of 100 particles, which is a value measured by an electron microscope. The average primary particle size is an arithmetic average value of the major axis and the minor axis of primary particles and is also called a two axis average diameter.

When calcium carbonate is used, each of surface-treated calcium carbonate and non-surface-treated calcium carbonate may be used singly, or used in combination. When an increase in the dispersibility of calcium carbonate is desired, a surface treatment is preferably applied, and when a cured product having high strength is desired, no surface treatment or a low level of a surface treatment is preferable. Examples of the surface treating agent for producing surface-treated calcium carbonate include, but are not limited to, carboxylic acid and ester thereof such as saturated fatty acid or unsaturated fatty acid represented by palmitic acid, caprylic acid, capric acid, lauric acid, stearic acid, arachidic acid, behenic acid, lignoceric acid, oleic acid, linoleic acid, linolenic acid and the like, and rosin acid-based compound and the like, silane compounds such as hexamethyldisilazane, chlorosilane, aminosilane and the like, paraffin-based compound and the like. Of these, carboxylic acid is preferable as a surface treating agent, since curing retardation hardly occurs when a curable silicone composition is produced. Among carboxylic acids, saturated fatty acid and unsaturated fatty acid are particularly preferable, since curing retardation more hardly occurs. When a cured product having high strength is desired, heavy calcium carbonate is preferably used. When a cured product having high tear strength is desired, colloidal calcium carbonate is preferably used.

To afford improved workability of the curable composition and matte surface of the cured product, addition of organic balloon or inorganic balloon is preferable. These balloons may be surface-treated. For improved workability (releaseability and the like), the particle size of the balloon is preferably not more than 0.1 mm. For matte surface of the cured product, the particle size of the balloon is preferably 5 - 300 µm. The particle size of the balloon is a value measured by an electron microscope.

The balloon is a spherical substance with a hollow inside. The balloon can be added for weight saving (density saving) of the composition. Examples of the balloon include, but are not limited to, inorganic balloon such as glass, white sand, silica and the like, and organic balloon such as phenol resin, urea resin, polystyrene, saran and the like. It is also possible to use a composite balloon of an inorganic material and an organic material, or a balloon having multiple layers. Furthermore, a balloon having a processed or coated surface can also be used. In addition, a balloon having a surface treated with various kinds of surface treating agents can also be used. For example, as a surface-coated balloon, an organic balloon coated with calcium carbonate, talc, titanium oxide and the like and an inorganic balloon surface-coated with a silane coupling agent and the like can be mentioned.

When a balloon is used, the content thereof is preferably 0.01 - 30 parts by weight, more preferably 0.1 - 20 parts by weight, per 100 parts by weight of the total content of polymer (A) and polymer (B). When the content is less than 0.01 part by weight, the workability-improving effect of the balloon is absent, and when it exceeds 30 parts by weight, elongation and breaking strength of a cured product tend to be low.

When a balloon is used, a slip preventive described in JP-A-2000-154368, and a primary and/or secondary amine described in JP-A-2001-164237, which affords a matte surface of a cured product, particularly primary and/or secondary amine having a melting point of not less than 35°C, can be added. Specific examples of the balloon are shown in JP-A-2-129262, JP-A-4-8788, JP-A-4-173867, JP-A-5-1225, JP-A-7-113073, JP-A-9-53063, JP-A-10-251618, JP-A-2000-154368, JP-A-2001-164237, WO97/05201 and the like.

In addition, thermally expandable hollow body described in JP-A-2004-51701, JP-A-2004-66749 and the like can be used. The thermally expandable hollow body is a plastic sphere obtained by enclosing a low boiling point compounds such as hydrocarbon having 1 to 5 carbon atoms and the like with a polymer outer shell material (e.g., vinylidene chloride-based copolymer, acrylonitrile-based copolymer, or vinylidene chloride-acrylonitrile copolymer) in spheres. When a cured product containing a thermally expandable hollow body is heated, the gas pressure in the shell of the thermally expandable hollow body increases, and the polymer outer shell material is softened to strikingly increase the volume thereof, which detaches the curable product adhered to the object.

Even when the curable composition of the present invention contains cured product particles for a sealing material, the cured product to be obtained forms concaves and convexes on the surface thereof and improve the design thereof. The preferable diameter, amount to be added, material and the like of the cured product particles for a sealing material are described in JP-A-2001-115142 as follows. The diameter thereof is preferably 0.1 mm - 1 mm, more preferably about 0.2 - 0.5 mm. The amount thereof in a curable composition is preferably 5 - 100 wt%, more preferably 20 - 50 wt%. While the material thereof is not limited as long as it can be used as a sealing material, it includes, for example, urethane resin, silicone, modified silicone, polysulfide rubber and the like. Of these, modified silicone is preferable.

The curable composition of the present invention may contain an anti-sagging agent, as necessary, to prevent sagging and improve workability. While the anti-sagging agent is not particularly limited, for example, polyamide wax; hydrogenated castor oil derivatives; metal soaps such as calcium stearate, aluminum stearate, barium stearate and the like, and the like can be mentioned as examples. When a rubber powder having a particle size of 10 - 500 µm as described in JP-A-11-349916 or an organic fiber as described in JP-A-2003-155389 is used as an anti-sagging agent, a curable composition showing high thixotropy and good workability can be obtained. Such anti-sagging agent may be used alone, or two or more kinds thereof may be used in combination. When an anti-sagging agent is used, the content thereof is preferably 0.1 - 20 parts by weight per 100 parts by weight of the total content of polymer (A) and polymer (B).

The curable composition of the present invention can contain an antioxidant (age resister). When an antioxidant is used, weather resistance of a cured product can be enhanced. Examples of the antioxidant include hindered phenol-based antioxidant, monophenol-based antioxidant, bisphenol-based antioxidant, and polyphenol-based antioxidant, and hindered phenol-based antioxidant is particularly preferable. Specific examples of the antioxidant are also recited in JP-A-4-283259 and JP-A-9-194731. When an antioxidant is used, the content thereof is preferably 0.1 - 10 parts by weight, more preferably 0.2 - 5 parts by weight, per 100 parts by weight of the total content of polymer (A) and polymer (B).

The curable composition of the present invention can contain a light stabilizer. Use of a light stabilizer prevents degradation of a cured product due to photooxidation. Examples of the light stabilizer include benzotriazole-based light stabilizer, hindered amine-based light stabilizer, benzoate-based light stabilizer and the like, and a hindered amine-based light stabilizer (HALS) is particularly preferable. When a light stabilizer is used, the content thereof is preferably 0.1 - 10 parts by weight, more preferably 0.2 - 5 parts by weight, per 100 parts by weight of the total content of polymer (A) and polymer (B).

When a photocurable substance (e.g., unsaturated acrylic compound) is used for the curable composition of the present invention, a tertiary amine-containing hindered amine-based light stabilizer is preferably used as a hindered amine-based light stabilizer (HALS), as described in JP-A-5-70531, to improve preservation stability of the curable composition. Examples of the tertiary amine-containing hindered amine-based light stabilizer include Tinuvin 622 LD, Tinuvin 144; CHIMASSORB119FL (each of the above manufactured by Ciba Japan K.K.); Adekastab LA-57, LA-62, LA-67, LA-63P (each of the above is manufactured by ADEKA CORPORATION); Sanol LS-765, LS-292, LS-2626, LS-1114, LS-744 (each of the above is manufactured by Sankyo Lifetech Co., Ltd.), and the like.

In the curable composition of the present invention, a UV absorber can be used. When a UV absorber is used, weather resistance of the surface of a cured product can be enhanced. Examples of the UV absorber include benzophenone-based UV absorber, benzoate-based UV absorber, benzotriazole-based UV absorber, salicylate-based UV absorber, substituted tolyl-based UV absorber and metal chelate-based UV absorber and the like. Of these, benzotriazole-based UV absorber and benzoate-based UV absorber are preferable. Examples of the benzotriazole-based UV absorber include trade name Tinuvin P, Tinuvin 213, Tinuvin 234, Tinuvin 326, Tinuvin 327, Tinuvin 328, Tinuvin 329, and Tinuvin 571 (each of the above manufactured by BASF). Particularly preferred is a 2-(2H-1,2,3-benzotriazol-2-yl)-phenol-based compound. Examples of the benzoate-based UV absorber include 2,4-di-tert-butylphenyl-3,5-di-tert-butyl-4-hydroxybenzoate (trade name: Sumisorb 400). Furthermore, a combined use of a phenol-based antioxidant and/or a hindered phenol-based antioxidant, and a hindered amine-based light stabilizer, and a benzotriazole-based UV absorber and/or a benzoate-based UV absorber is preferable. When a UV absorber is used, the content thereof is preferably 0.1 - 10 parts by weight, more preferably 0.2 - 5 parts by weight, per 100 parts by weight of the total content of polymer (A) and polymer (B).

The curable composition of the present invention may contain various additives as necessary to adjust various properties of a curable composition or a cured product. Examples of such additive include flame-retardant, curability adjusting agent, radical inhibitor, metal deactivator, antiozonant, phosphorus peroxide decomposer, lubricant, pigment, blowing agent, solvent, fungicide and the like. Only one kind of these additives may be used, or two or more kinds thereof may be used in combination. Specific examples of the additive are recited in JP-B-4-69659, JP-B-7-108928, JP-A-63-254149, JP-A-64-22904, JP-A-2001-72854 and the like.

The curable composition of the present invention can also be prepared as a one-component composition to be cured by moisture in the air after application by previously blending all components to be blended, and preserving same after tightly sealing. In addition, the curable composition of the present invention can also be prepared as a two-component composition to be used by mixing a curing agent containing a curing agent containing components such as curing catalyst, filler, plasticizer, water and the like, which is prepared separately, and a curable composition before use. In view of workability, a one-component composition is preferable

When the curable composition is a one-component composition, all components to be blended are blended in advance. Therefore, components containing moisture to be blended are preferably dehydrated and dried before use, or dehydrated during kneading under reduced pressure and the like. When the curable composition is a two-component composition, a curing catalyst does not need to be added to a main agent containing a polymer having a reactive silicon group. Therefore, even when components to be blended contain some moisture, gelation is not feared; however, when storage stability over a long term is necessary, components to be blended are preferably dehydrated and dried. When components to be blended are solid such as powder and the like, a dehydrating and drying method is preferably a heat drying method, and when components to be blended are liquid, a reduced pressure dehydrating method, or a dehydrating method using synthesis zeolite, activated alumina, silica gel, calcium oxide, magnesium oxide and the like is preferable. In addition, it is possible to perform dehydration by adding a small amount of an isocyanate compound to the components to be blended to allow for a reaction of the isocyanate group and water. It is also possible to perform dehydration by adding an oxazolidine compound such as 3-ethyl-2-methyl-2-(3-methylbutyl)-1,3-oxazolidine and the like to components to be blended to allow for a reaction of the oxazolidine compound and water. The storage stability of a curable composition is further improved by adding lower alcohol such as methanol, ethanol and the like; alkoxysilane compounds such as n-propyltrimethoxysilane, vinyltrimethoxysilane, vinylmethyldimethoxysilane, γ-mercaptopropylmethyldimethoxysilane, γ-mercaptopropylmethyldiethoxysilane, γ-glycidoxypropyltrimethoxysilane and the like in addition to the dehydrating and drying method.

When a dehydrating agent (e.g., silicon compounds capable of reacting with water such as vinyltrimethoxysilane and the like) is used, the content thereof in the curable composition is preferably 0.1 - 20 parts by weight, more preferably 0.5 - 10 parts by weight, per 100 parts by weight of the total content of polymer (A) and polymer (B).

The curable composition of the present invention may contain a physical property modifier, as necessary, that controls the tensile property of the obtained cured product. While the physical property modifier is not particularly limited, for example, alkylalkoxysilanes such as phenoxytrimethylsilane, methyltrimethoxysilane, dimethyldimethoxysilane, trimethylmethoxysilane, n-propyltrimethoxysilane and the like; arylalkoxysilanes such as diphenyldimethoxysilane, phenyltrimethoxysilane and the like; alkylisopropenoxysilanes such as dimethyldiisopropenoxysilane, methyltriisopropenoxysilane, γ-glycidoxypropylmethyldiisopropenoxysilane and the like; trialkylsilyl borates such as tris(trimethylsilyl) borate, tris(triethylsilyl) borate and the like; silicone varnish; polysiloxanes and the like can be mentioned. Using the physical property modifier, the hardness of the obtained cured product may be increased or conversely decreased to improve elongation at break. Only one kind of the physical property modifier may be used, or two or more kinds thereof may be used in combination.

Particularly, a compound that forms a compound having a monovalent silanol group in a molecule by hydrolysis decreases the modulus of the cured product without worsening the stickiness of the surface of the cured product. Particularly, a compound forming trimethylsilanol is preferable. As a compound that forms a compound having a monovalent silanol group in a molecule by hydrolysis, a compound described in JP-A-5-117521 can be mentioned as an example. In addition, a compound that forms R₃SiOH such as trimethylsilanol and the like by hydrolysis, which is a derivative of alkyl alcohol such as hexanol, octanol, decanol and the like, a compound that forms R₃SiOH such as trimethylsilanol and the like by hydrolysis, which is a derivative of polyvalent alcohol having not less than 3 hydroxy groups, such as trimethylolpropane, glycerol, pentaerythritol, sorbitol and the like as described in JP-A-11-241029 can be mentioned as examples.

Moreover, a compound that forms R₃SiOH such as trimethylsilanol and the like by hydrolysis, which is a derivative of a polyoxypropylene described in JP-A-7-258534 can be mentioned as an example. Furthermore, polyoxypropylene having a crosslinkable hydrolyzable silicon group and a silicon group, which produces a monosilanol by hydrolysis as described in JP-A-6-279693 can also be used.

The curable composition of the present invention can contain a tackifier resin as necessary to enhance adhesiveness and close adhesiveness to a substrate and the like. The tackifier resin is not particularly limited, and one generally used can be used. Examples of the tackifier resin include terpene-based resin, aromatic modified terpene resin, hydrogenated terpene resin, terpene-phenol resin obtained by copolymerizing terpenes with phenols, phenol resin, modified phenol resin, xylene-phenol resin, cyclopentadiene-phenol resin, coumaroneinden resin, rosin resin, rosin ester resin, hydrogenated rosin ester resin, xylene resin, low-molecular weight polystyrene-based resin, styrene copolymer and a hydrogenated product thereof, petroleum resin (e.g., C5 hydrocarbon resin, C9 hydrocarbon resin, C5C9 hydrocarbon copolymer resin etc.), hydrogenated petroleum resin, DCPD resin and the like. Examples of the styrene copolymer which is a tackifier resin and a hydrogenated product thereof include styrene-butadiene-styrene block copolymer (SBS), styrene-isoprene-styrene block copolymer (SIS), styrene-ethylenebutylene-styrene block copolymer (SEBS), styrene-ethylenepropylene-styrene block copolymer (SEPS), styrene-isobutylene-styrene block copolymer (SIBS) and the like. Only one kind of the tackifier resin may be used, or two or more kinds thereof may be used in combination. Of these, terpene-phenol resin is preferable since it shows high compatibility with polymer (A) and polymer (B) and affords highly close adhering effect. On the other hand, when color tone is important, a petroleum resin is preferable.

When a tackifier resin is used, the content thereof is preferably 2 - 100 parts by weight, more preferably 5 - 50 parts by weight, further preferably 5 - 30 parts, per 100 parts by weight of the total content of polymer (A) and polymer (B). When the content is less than 2 parts by weight, an adhesion and close adhesion effect to a substrate is difficult to obtain, and when it exceeds 100 parts by weight, viscosity of a curable composition sometimes becomes too high and handling becomes difficult.

An epoxy compound can be used for the cured composition of the present invention. By the use of an epoxy compound, the recovery property of the cured product can be increased. As an epoxy group, epoxydized unsaturated fats and oils, epoxydized unsaturated fatty acid esters, alicyclic epoxy compounds, epichlorohydrin derivative and mixture s thereof and the like can be mentioned as examples. Specifically, epoxydized soy bean oil, epoxydized linseed oil, bis(2-ethylhexyl)-4,5-epoxycyclohexane-1,2-dicarboxylate (E-PS), epoxyoctyl stearate, epoxybutyl stearate and the like can be mentioned as examples. Of these, E-PS is particularly preferable. When an epoxy compound is used, the content thereof is preferably 0.5 - 50 parts by weight per 100 parts by weight of the total content of polymer (A) and polymer (B).

A photocurable substance can be used for the cured composition of the present invention. When a photocurable substance is used, a film of the photocurable substance is formed on the surface of the cured product, the stickiness and weather resistance of the cured product can be improved. The photocurable substance produces curing (crosslinking) by the action of light. As the photocurable substance, monomer, oligomer resin, a composition containing same and the like are known. As a photocurable substance, a commercially available product can be used. As a representative photocurable substance, an unsaturated (meth)acrylic compound, polyvinyl cinnamate, an azidated resin and the like can be mentioned.

Examples of the unsaturated (meth)acrylic compound include monomers, oligomers and a mixture thereof, having plural (meth)acryloyl groups which are monomers such as propylene glycol di(meth)acrylate, butylene glycol di(meth)acrylate, ethylene glycol di(meth)acrylate, neopentyl glycol di(meth)acrylate and the like, oligoesters or polyesters having a molecular weight of 10,000 or below or constituted of the aforementioned monomers. Specifically, for example, Aronix M-210, Aronix M-215, Aronix M-220, Aronix M-233, Aronix M-240, Aronix M-245 having two (meth)acryloyl groups in one molecule; Aronix M305, Aronix M-309, Aronix M-310, Aronix M-315, Aronix M-320, Aronix M-325 having three (meth)acryloyl groups in one molecule; Aronix M-400 having four or more (meth)acryloyl groups in one molecule (each of Aronix above is a product of Toagosei Co., Ltd.) and the like can be mentioned. Particularly, a compound containing an acryloyl group is preferable, and a compound containing not less than 3 acryloyl groups on average in one molecule is preferable.

Examples of the polyvinyl cinnamate include polyvinyl cinnamate derivative, and a photosensitive resin having a cinnamoyl group obtained by esterification of polyvinyl alcohol with cinnamic acid. The azidated resin is a photosensitive resin having an azido group. "Photosensitive Resin" (Insatsu Gakkai Shuppanbu Ltd., page 93-, page 106-, page 117-, March 17, 1972) discloses detailed examples of azidated resin.

The photocurable substance may be used singly, or used in combination with a sensitizer and/or a promoter as necessary. Examples of the sensitizer include ketones, nitro compound and the like and examples of the promoter include amines and the like.

When a photocurable substance is used, the content thereof is preferably 0.1 - 20 parts by weight, more preferably 0.5 - 10 parts by weight, per 100 parts by weight of the total content of polymer (A) and polymer (B). When the amount is less than 0.1 part by weight, the weather resistance is not enhanced, and when the amount is more than 20 parts by weight, the cured product becomes too hard and tends to crack.

The composition of the present invention can contain an oxygen curable substance. As the oxygen curable substance, an unsaturated compound reactive with oxygen in the air can be mentioned as an example. It reacts with oxygen in the air to form a cured film near the surface of the cured product, thereby preventing stickiness of the surface and attachment of dirt and dust on the surface of the cured product and the like. Examples of the oxygen curable substance include dry oil such as tung oil, linseed oil and the like, alkyd resins obtained by modifying dry oil; acrylic polymer, epoxy resin and silicone resin, each modified by dry oil; liquid diene polymers such as 1,2-polybutadiene, 1,4-polybutadiene, C5 - C8 diene polymer and the like obtained by polymerization or copolymerization of diene compounds such as butadiene, chloroprene, isoprene, 1,3-pentadiene and the like; liquid copolymers such as NBR, SBR and the like obtained by copolymerization of monomers such as acrylonitrile, styrene and the like, which are copolymerizable with these diene compounds, such that the diene compound becomes the main component, modified products of the above-mentioned oxygen curable substance (maleic modified products, boil oil modified products and the like) and the like. They may be used alone, or two or more kinds thereof may be used in combination. Of these, tung oil and liquid diene polymer are preferable. In addition, a combined use of a catalyst promoting the oxidation curing reaction or a metal dryer and an oxygen curable substance may enhance the effect thereof. As such catalyst and metal dryer, metal salts such as cobalt naphthenate, lead naphthenate, zirconium naphthenate, cobalt octylate, zirconium octylate and the like, amidine compound and the like can be mentioned as examples. When an oxygen curable substance is used, its content is preferably 0.1 - 20 parts by weight, more preferably 0.5 - 10 parts by weight, per 100 parts by weight of the total content of polymer (A) and polymer (B). When the aforementioned content is less than 0.1 part by weight, improvement of staining property of the surface of the cured product becomes insufficient, and when it exceeds 20 parts by weight, the tensile property and the like of the cured product tend to be impaired. As described in JP-A-3-160053, the oxygen curable substance is preferably used in combination with a photocurable substance.

The curable composition of the present invention can contain an epoxy resin. A curable composition containing an epoxy resin is particularly preferable as an adhesive, especially an adhesive for exterior wall tiles. As the epoxy resin, flame-retardant epoxy resins such as epichlorohydrin-bisphenol A epoxy resin, epichlorohydrin-bisphenol F epoxy resin, tetrabromobisphenol A glycidyl ether and the like, novolac epoxy resin, hydrogenated bisphenol A epoxy resin, glycidyl ether epoxy resin of bisphenol A propylene oxide addition product, p-oxybenzoic acid glycidyl ether ester epoxy resin, m-aminophenol-based epoxy resin, diaminodiphenylmethane-based epoxy resin, urethane modified epoxy resin, alicyclic epoxy resin, N,N-diglycidyl aniline, N,N-diglycidyl-o-toluidine, triglycidyl isocyanurate, polyalkylene glycol diglycidyl ether, glycidyl ethers of polyvalent alcohol such as glycerol and the like, hydantoin epoxy resin, epoxy product of unsaturated polymers such as petroleum resin and the like, and the like can be mentioned as examples. Examples are not limited to these and conventional epoxy resins can be used. As the epoxy resin, bisphenol A epoxy resin and novolac epoxy resin are preferable.

When is an epoxy resin is used, the weight ratio of the total of polymer (A) and polymer (B) and an epoxy resin ((polymer (A) and polymer (B))/epoxy resin) is preferably 1/100 - 100/1. When the weight ratio is less than 1/100, an improving effect on the impact strength and toughness by the epoxy resin is difficult to obtain, when the weight ratio thereof exceeds 100/1, the strength of the cured product tends to be insufficient.

A preferable content of the epoxy resin in the curable composition of the present invention cannot be determined unconditionally, since it varies depending on the use of a curable resin composition and the like. For example, when an epoxy resin is used to improve the strength of the obtained cured product, the content thereof is preferably 1 - 200 parts by weight, more preferably 5 - 100 parts by weight, per 100 parts by weight of the total content of polymer (A) and polymer (B) .

When an epoxy resin is used, a curing agent for epoxy resin may also be used in the curable composition of the present invention. A curing agent for epoxy resin is not particularly limited, and a conventionally-used curing agent for epoxy resin can be used. Examples thereof include, but are not limited to, primary or secondary amines such as triethylenetetramine, tetraethylenepentamine, diethylaminopropylamine, N-aminoethylpiperidine, m-xylylenediamine, m-phenylenediamine, diaminodiphenylmethane, diaminodiphenylsulfone, isophoronediamine, amine terminal polyether and the like; tertiary amine and these salts such as 2,4,6-tris(dimethylaminomethyl)phenol, tripropylamine and the like; polyamide resins; imidazoles; dicyanodiamides; boron trifluoride complex compounds; carboxylic anhydrides such as phthalic anhydride, hexahydrophthalic anhydride, tetrahydrophthalic anhydride, dodecinyl succinic anhydride, pyromellitic anhydride, chlorendic anhydride and the like; alcohols; phenols; carboxylic acids; diketone complex compound of aluminum or zirconium and the like. The curing agent for epoxy resin may be used alone, or two or more kinds thereof may be used in combination. When a curing agent for epoxy resin is used, the amount thereof to be used is preferably 0.1 - 300 parts by weight per 100 parts by weight of the epoxy resin.

As a curing agent of an epoxy resin, ketimine can be used. Ketimine is stably present in a state free of moisture, and decomposed into primary amine and ketone by reacting with moisture, and the resulting primary amine is a room temperature-curable curing agent for the epoxy resin. Use of ketimine affords a one-component composition. Such ketimine can be obtained by the condensation reaction of amine and a carbonyl compound. For the synthesis of ketimine, known amine and carbonyl compounds may be used. For example, as amine, diamines such as ethylenediamine, propylenediamine, trimethylenediamine, tetramethylenediamine, 1,3-diaminobutane, 2,3-diaminobutane, pentamethylenediamine, 2,4-diaminopentane, hexamethylenediamine, p-phenylenediamine, p,p'-biphenylenediamine and the like; polyvalent amines such as 1,2,3-triaminopropane, triaminobenzene, tris(2-aminoethyl)amine, tetra(aminomethyl)methane and the like; polyalkylenepolyamines such as diethylenetriamine, triethylenetriamine, tetraethylenepentamine and the like; polyoxyalkylene-based polyamine; aminosilanes such as γ-aminopropyltriethoxysilane, N-(β-aminoethyl)-γ-aminopropyltrimethoxysilane, N-(β-aminoethyl)-γ-aminopropylmethyldimethoxysilane and the like; and the like can be used. As the carbonyl compound, aldehydes such as acetaldehyde, propionaldehyde, n-butylaldehyde, isobutylaldehyde, diethylacetoaldehyde, glyoxal, benzaldehyde and the like; cyclic ketones such as cyclopentanone, trimethylcyclopentanone, cyclohexanone, trimethylcyclohexanone and the like; aliphatic ketones such as acetone, methyl ethyl ketone, methyl propyl ketone, methyl isopropyl ketone, methyl isobutyl ketone, diethyl ketone, dipropyl ketone, diisopropyl ketone, dibutyl ketone, diisobutyl ketone and the like; β-dicarbonyl compounds such as acetylacetone, methyl acetoacetate, ethyl acetoacetate, dimethyl malonate, diethyl malonate, methyl ethyl malonate, dibenzoylmethane and the like; and the like can be mentioned.

When an imino group is present in ketimine, the imino group may be reacted with styrene oxide; glycidyl ethers such as butylglycidyl ether, allyl glycidyl ether and the like; glycidyl ester and the like. The ketimine may be used alone, or two or more kinds thereof may be used in combination. When ketimine is used, the amount thereof is 1 - 100 parts by weight per 100 parts by weight of the epoxy resin, where the amount of use varies depending on the kind of epoxy resin and ketimine.

The curable composition of the present invention can contain a flame-retardant such as a phosphorus plasticizer such as ammonium polyphosphate, tricresyl phosphate and the like, and aluminum hydroxide, magnesium hydroxide, and thermally expandable black lead and the like. The flame-retardant may be used alone, or two or more kinds thereof may be used in combination. When a flame-retardant is used, the content thereof is preferably 5 - 200 parts by weight, more preferably 10 - 100 parts by weight, per 100 parts by weight of the total content of polymer (A) and polymer (B).

### <Curable composition>

In a preferable curable composition of the present invention,
polymer (A) is preferably a polyoxypropylene having a number average molecular weight of 10,000 - 50,000 and having 1.2 - 6.0 dimethoxymethylsilyl groups or trimethoxymethyl groups on average as reactive silicon group in one molecule,
polymer (B) is poly(meth)acrylate (B1) having a trimethoxymethyl group as a reactive silicon group, a reactive silicon group equivalent of 0.30 - 3.0 mmol/g, a number average molecular weight of 4,000 - 100,000, 50 - 95 wt% as the total amount of monomer (b3) and monomer (b4) in the total monomer constituting polymer (B), and a weight ratio of monomer (b3) and monomer (b4) (monomer (b3):monomer (b4)) of 95:5 - 40:60, or poly(meth)acrylate (B2) having a trimethoxymethyl group as a reactive silicon group, a reactive silicon group equivalent of 0.30 - 3.0 mmol/g, a number average molecular weight of 4,000 - 100,000, 50 - 95 wt% as the total amount of monomer (b3) and monomer (b4) in the total monomer constituting polymer (B), and a weight ratio of monomer (b3) and monomer (b4) (monomer (b3):monomer (b4)) of 95:5 - 40:60,
high-molecular weight plasticizer (C) comprises high-molecular weight plasticizer (C1) which is polyoxypropylene or poly(meth)acrylate having a number average molecular weight of 500 - 15,000 and 0.3 - 1 reactive silicon group on average in one molecule, and/or high-molecular weight plasticizer (C2) which is polyoxypropylene or poly(meth)acrylate free of a reactive silicon group and having a number average molecular weight of 500 - 15,000,
the total content of polymer (A) and polymer (B) in a curable composition is 30 - 90 wt%,
the weight ratio of polymer (A) and polymer (B) (polymer (A): polymer (B)) is 90:10 - 30:70, and
the content of high-molecular weight plasticizer (C) is 5 - 200 parts by weight per 100 parts by weight of the total content of polymer (A) and polymer (B).

In a more preferable curable composition of the present invention,
polymer (A) is preferably a polyoxypropylene having a number average molecular weight of 15,000 - 35,000 and having 1.3 - 5.5 dimethoxymethylsilyl groups or trimethoxymethyl groups on average as reactive silicon group in one molecule,
polymer (B) is poly(meth)acrylate (B1) having a trimethoxymethyl group as a reactive silicon group, a reactive silicon group equivalent of 0.35 - 2.5 mmol/g, a number average molecular weight of 6,000 - 50,000, 60 - 90 wt% as the total amount of monomer (b3) and monomer (b4) in the total monomer constituting polymer (B), and a weight ratio of monomer (b3) and monomer (b4) (monomer (b3):monomer (b4)) of 90:10 - 60:40, or poly(meth)acrylate (B2) having a trimethoxymethyl group as a reactive silicon group, a reactive silicon group equivalent of 0.35 - 2.5 mmol/g, a number average molecular weight of 1,500 - 3,000, 60 - 90 wt% as the total amount of monomer (b3) and monomer (b4) in the total monomer constituting polymer (B), and a weight ratio of monomer (b3) and monomer (b4) (monomer (b3):monomer (b4)) of 90:10 - 60:40,
high-molecular weight plasticizer (C) comprises high-molecular weight plasticizer (C1) which is polyoxypropylene or poly(meth)acrylate having a number average molecular weight of 1,000 - 10,000 and 0.5 - 1 reactive silicon group on average in one molecule, and/or high-molecular weight plasticizer (C2) which is polyoxypropylene or poly(meth)acrylate free of a reactive silicon group and having a number average molecular weight of 1,000 - 10,000,
the total content of polymer (A) and polymer (B) in a curable composition is 50 - 80 wt%,
the weight ratio of polymer (A) and polymer (B) (polymer (A): polymer (B)) is 85:15 - 40:60, and
the content of high-molecular weight plasticizer (C) is 10 - 150 parts by weight per 100 parts by weight of the total content of polymer (A) and polymer (B).

In a further preferable curable composition of the present invention,
polymer (A) is preferably a polyoxypropylene having a number average molecular weight of 20,000 - 30,000 and having 1.5 - 5.0 dimethoxymethylsilyl groups on average as reactive silicon group in one molecule,
polymer (B) is poly(meth)acrylate (B1) having a trimethoxymethyl group as a reactive silicon group, a reactive silicon group equivalent of 0.40 - 2.0 mmol/g, a number average molecular weight of 8,000 - 30,000, 60 - 90 wt% wt% as the total amount of monomer (b3) and monomer (b4) in the total monomer constituting polymer (B), and a weight ratio of monomer (b3) and monomer (b4) (monomer (b3):monomer (b4)) of 90:10 - 60:40, or poly(meth)acrylate (B2) having a trimethoxymethyl group as a reactive silicon group, a reactive silicon group equivalent of 0.40 - 2.0 mmol/g, a number average molecular weight of 1,500 - 3,000, 60 - 90 wt% as the total amount of monomer (b3) and monomer (b4) in the total monomer constituting polymer (B), and a weight ratio of monomer (b3) and monomer (b4) (monomer (b3):monomer (b4)) of 90:10 - 60:40,
high-molecular weight plasticizer (C) comprises high-molecular weight plasticizer (C1) which is polyoxypropylene or poly(meth)acrylate having a number average molecular weight of 2,000 - 8,000 and 0.6 - 1 reactive silicon group on average in one molecule, and high-molecular weight plasticizer (C2) which is polyoxypropylene or poly(meth)acrylate free of a reactive silicon group and having a number average molecular weight of 2,000 - 8,000, and the weight ratio of high-molecular weight plasticizer (C1) and high-molecular weight plasticizer (C2) (high-molecular weight plasticizer (C1):high-molecular weight plasticizer (C2)) is 80:20 - 50:50,
the total content of polymer (A) and polymer (B) in a curable composition is 50 - 80 wt%,
the weight ratio of polymer (A) and polymer (B) (polymer (A): polymer (B)) is 80:20 - 50:50, and
the content of high-molecular weight plasticizer (C) is 20 - 100 parts by weight per 100 parts by weight of the total content of polymer (A) and polymer (B).

The production method of the curable composition of the present invention is not particularly limited. The curable composition of the present invention can be produced by a method including blending the above-mentioned components, kneading the mixture in a mixer, roll, kneader and the like at ambient temperature or a method including dissolving the above-mentioned components in a small amount of a solvent and mixing same.

The curable composition of the present invention can be used as a pressure-sensitive adhesive, a sealing material for structures, boats and ships, automobiles, roads and the like, adhesive, blocking agent, insulation, vibration damper, acoustic insulation, foamed material, paint, spraying material, coating film waterproofing agent and the like. Since the curable composition of the present invention is low viscose and superior in workability. A cured product obtained from the curable composition of the present invention is characterized by high strength and high elongation. Therefore, the curable composition of the present invention is preferably used as a sealing material, an adhesive or a coating film-waterproofing agent, and more preferably used as a coating film-waterproofing agent. Accordingly, the present invention also provides a coating film-waterproofing agent containing the aforementioned curable composition.

In addition, the curable composition of the present invention can be used for various uses including electric or electronic component materials such as solar battery rear surface sealant and the like, electrical insulating materials such as insulation covering material for electric wire or cable and the like, elastic adhesive, contact-type adhesive, spray-type sealing material, crack repairing material, tiling adhesive, powder coating, casting material, medical rubber material, medical adhesive, medical equipment sealing material, food packaging material, joint sealing material for jacket material such as sizing board and the like, coating material, primer, conductive material for shielding electromagnetic wave, thermally conductive material, hot melt material, electric/electronic potting agent, film, gasket, various molding material, as well as rustproof or waterproof sealing material for wire glass or laminate glass end surface (cut section), liquid sealant used for automobile parts, electric parts, various machine components and the like, and the like. Moreover, since the curable composition of the present invention alone or a mixture of the curable composition of the present invention and a primer can be closely adhered to a wide range of substrates such as glass, porcelain, wood, metal, resin molded products and the like, the curable composition of the present invention can also be used as various types of tight-sealing composition or adhesive composition. Furthermore, since the curable composition of the present invention can be used as adhesive for interior panels, adhesive for exterior panels, tiling adhesive, stone finishing adhesive, ceiling finishing adhesive, floor finishing adhesive, wall finishing adhesive, vehicle paneling adhesive, electric or electronic or precision equipment assembly adhesive, sealing material for direct glazing, multi-layer glass sealing material, SSG method sealing material, or structure working joint sealing material.

### Examples

The present invention is explained in more detail in the following by referring to specific Examples, which are not to be construed as limitative.

### (Synthetic Example 1: Synthesis of polymer (A-1))

Propylene oxide was polymerized using polyoxypropylene diol having a molecular weight of about 2,000 as an initiator and zinc hexacyanocobaltate glyme complex as a catalyst to give polyoxypropylene diol having a number average molecular weight of 28,500. Then, a methanol solution containing 1.2 equivalents of NaOMe relative to 1 equivalent of hydroxy group of polyoxypropylene diol was added, methanol was evaporated, and 1.5 equivalents of 3-chloro-2-methyl-1-propene was added to convert the terminal hydroxy group to a methallyl group. The inside of the container was substituted with 6% by volume of O₂/N₂, 100 weight ppm of sulfur (0.25 wt% hexane solution) and 100 weight ppm of a platinum divinyldisiloxane complex (3 wt% isopropanol solution based on platinum) were added per 100 parts by weight of the obtained polyoxypropylene having a terminal methallyl group, and 2.30 parts by weight of dimethoxymethylsilane was slowly added dropwise with stirring. The mixed solution was reacted at 100°C for 5 hr, and unreacted dimethoxymethylsilane was evaporated under reduced pressure to give linear polyoxypropylene (polymer (A-1)) having a dimethoxymethylsilyl group on the terminal, 1.9 reactive silicon groups on average per 1 molecule, a number average molecular weight (Mn) of 28,500, and a molecular weight distribution (Mw/Mn) of 1.2.

The number average molecular weight (Mn), weight average molecular weight (Mw) and molecular weight distribution (Mw/Mn) of polyoxypropylene diol and polymer (A-1) were measured using HLC-8120GPC manufactured by Tosoh Corporation as a solution delivery system, TSK-GEL H type manufactured by Tosoh Corporation as a column, THF as a solvent, and polystyrene as the standard. The same applies to the below-mentioned Mn, Mw and Mw/Mn.

### (Synthetic Example 2: Synthesis of polymer (A-2))

Propylene oxide was polymerized using polyoxypropylene triol having a molecular weight of about 3,000 as an initiator and zinc hexacyanocobaltate glyme complex as a catalyst to give polyoxypropylene triol having a number average molecular weight of 26,200. Then, a methanol solution containing 1.2 equivalents of NaOMe relative to 1 equivalent of hydroxy group of polyoxypropylene triol was added, methanol was evaporated, and 1.5 equivalents of 3-chloro-1-propene was added to convert the terminal hydroxy group to an allyl group. Then, 36 weight ppm of a platinum divinyldisiloxane complex (3 wt% isopropanol solution based on platinum) was added per 100 parts by weight of the obtained allyl group terminal polyoxypropylene, and 1.69 parts by weight of TES (triethoxysilane) was slowly added dropwise with stirring. The mixed solution was reacted at 90°C for 2 hr, and the unreacted TES was evaporated under reduced pressure. Furthermore, methanol (20 parts by weight) and HCl (12 weight ppm) were added to convert the terminal ethoxy group to a methoxy group to give branched chain polyoxypropylene (polymer (A-2)) having a trimethoxysilyl group on the terminal, 1.8 reactive silicon groups on average per 1 molecule, a number average molecular weight (Mn) of 26,200, and a molecular weight distribution (Mw/Mn) of 1.3.

### (Synthetic Example 3: Synthesis of polymer (A-3))

Propylene oxide was polymerized using polyoxypropylene diol having a molecular weight of about 2,000 as an initiator and zinc hexacyanocobaltate glyme complex as a catalyst to give polyoxypropylene diol having a number average molecular weight of about 28,500. Then, a methanol solution containing 1.0 equivalent of NaOMe relative to 1 equivalent of hydroxy group of polyoxypropylene diol was added, methanol was evaporated, then 1.0 equivalent of allyl glycidyl ether was added and the mixture was reacted at 130°C for 2 hr. Then, a methanol solution containing 0.28 equivalent of sodium methoxide was added, methanol was removed, and 1.79 equivalents of 3-chloro-1-propene was added to convert the terminal hydroxy group to an allyl group. As a result, polyoxypropylene having 2.1 carbon-carbon unsaturated bonds on average on one terminal part was obtained. Then, 36 weight ppm of a platinum divinyldisiloxane complex (3 wt% isopropanol solution based on platinum) was added per 100 parts by weight of the obtained polymer, and 1.9 parts by weight of dimethoxymethylsilane was slowly added dropwise with stirring. The mixed solution was reacted at 90°C for 2 hr, and the unreacted dimethoxymethylsilane was evaporated under reduced pressure to give linear polyoxypropylene (polymer (A-3)) having a dimethoxymethylsilyl group on the terminal, 3.2 reactive silicon groups per 1 molecule, and a number average molecular weight of 28,500.

### (Synthetic Example 4: Synthesis of polymer (B-1))

Isobutanol (48.6 parts by weight) was placed in a four-mouthed flask provided with a stirring machine, and the temperature was raised under a nitrogen atmosphere to 105°C. A mixed solution of methyl methacrylate (65.0 parts by weight), 2-ethylhexyl acrylate (25.0 parts by weight), 3-methacryloxypropyltrimethoxysilane (10.0 parts by weight), 3-mercaptopropyltrimethoxysilane (8.0 parts by weight),: and 2,2'-azobis(2-methylbutyronitrile) (2.5 parts by weight) in isobutanol (22.7 parts by weight) was added dropwise thereto over 5 hr. Polymerization was performed at 105°C for 2 hr, to give an isobutanol solution (solid content 60 wt%) of poly(meth)acrylate (polymer (B-1)) having 1.8 trimethoxysilyl groups (reactive silicon groups) on average in one molecule, a reactive silicon group equivalent of 0.75 mmol/g, and a number average molecular weight of 2,400.

The reactive silicon group equivalent of polymer (B-1) is a value calculated from the amount of added monomer having a reactive silicon group. The same applies to the below-mentioned reactive silicon group equivalent.

### (Synthetic Example 5: Synthesis of polymer (B-2))

Isobutanol (26.7 parts by weight) was placed in a four-mouthed flask provided with a stirring machine, and the temperature was raised under a nitrogen atmosphere to 105°C. A mixed solution of methyl methacrylate (56.0 parts by weight), stearyl methacrylate (32.0 parts by weight), 3-methacryloxypropyltrimethoxysilane (12.0 parts by weight) and 2,2'-azobis(2-methylbutyronitrile) (4.5 parts by weight) in isobutanol (43.1 parts by weight) was added dropwise thereto over 5 hr. Polymerization was performed at 105°C for 2 hr, to give an isobutanol solution (solid content 60 wt%) of poly(meth)acrylate (polymer (B-2)) having 2.8 trimethoxysilyl groups (reactive silicon groups) on average in one molecule, a reactive silicon group equivalent of 0.48 mmol/g, and a number average molecular weight of 6,000.

### (Synthetic Example 6: Synthesis of polymer (B-3))

Isobutanol (26.7 parts by weight) was placed in a four-mouthed flask provided with a stirring machine, and the temperature was raised under a nitrogen atmosphere to 105°C. A mixed solution of methyl methacrylate (20.0 parts by weight), butyl methacrylate (36.0 parts by weight), stearyl methacrylate (32.0 parts by weight), 3-methacryloxypropyltrimethoxysilane (12.0 parts by weight), and 2,2'-azobis(2-methylbutyronitrile) (4.5 parts by weight) in isobutanol (40.6 parts by weight) was added dropwise thereto over 5 hr. Polymerization was performed at 105°C for 2 hr, to give an isobutanol solution (solid content 60 wt%) of poly(meth)acrylate (polymer (B-3)) having 2.9 trimethoxysilyl groups (reactive silicon groups) on average in one molecule, a reactive silicon group equivalent of 0.48 mmol/g, and a number average molecular weight of 6,500.

### (Synthetic Example 7: Synthesis of polymer (P-1))

Isobutanol (26.7 parts by weight) was placed in a four-mouthed flask provided with a stirring machine, and the temperature was raised under a nitrogen atmosphere to 105°C. A mixed solution of methyl methacrylate (56.0 parts by weight), stearyl methacrylate (32.0 parts by weight), 3-methacryloxypropyldimethoxymethylsilane (12.0 parts by weight) and 2,2'-azobis(2-methylbutyronitrile) (4.5 parts by weight) in isobutanol (43.1 parts by weight) was added dropwise thereto over 5 hr. Polymerization was performed at 105°C for 2 hr, to give an isobutanol solution (solid content 60%) of (meth)acrylate-based polymer (polymer (P-1)) having 2.8 dimethoxymethylsilyl groups (reactive silicon) on average in one molecule, a reactive silicon group equivalent of 0.48 mmol/g, and a number average molecular weight of 6,000.

### (Synthetic Example 8: Polymer (P-2))

Isobutanol (26.7 parts by weight) was placed in a four-mouthed flask provided with a stirring machine, and the temperature was raised under a nitrogen atmosphere to 105°C. A mixed solution of methyl methacrylate (27.0 parts by weight), butyl methacrylate (36.0 parts by weight), stearyl methacrylate (32.0 parts by weight), 3-methacryloxypropyltrimethoxysilane (5.0 parts by weight), and 2,2'-azobis(2-methylbutyronitrile) (4.5 parts by weight) in isobutanol (40.6 parts by weight) was added dropwise thereto over 5 hr. Polymerization was performed at 105°C for 2 hr, to give an isobutanol solution (solid content 60 wt%) of (meth)acrylate-based ester polymer (polymer (P-2)) having 1.3 trimethoxysilyl groups (reactive silicon groups) on average in one molecule, a reactive silicon group equivalent of 0.20 mmol/g, and a number average molecular weight of 6,500.

The kind and amount of the monomers used in Synthetic Examples 4 - 8, the glass transition temperature (Tg) of homopolymer of the monomer, the number average molecular weight (Mn) of the obtained polymer (B-1) - (B-3), (P-1) and (P-2), weight average molecular weight (Mw), the number of the reactive silicon groups (average) in one molecule and the reactive silicon group equivalent are shown in Table 1.

**Table 1**

| | | Tg(°C) of homopolymer of monomer | polymer | | | | |
|---|---|---|---|---|---|---|---|
| | | | (B-1) | (B-2) | (B-3) | (P-1) | (P-2) |
| monomer (parts by weight) | MMA | 105 | 65.0 | 56.0 | 20.0 | 56.0 | 27.0 |
| | BMA | 20 | | | 36.0 | | 36.0 |
| | BA | -55 | | | | | |
| | 2-EHA | -50 | 25.0 | | | | |
| | SMA | -100 | | 32.0 | 32.0 | 32.0 | 32.0 |
| | TSMA | - | 10.0 | 12.0 | 12.0 | | 5.0 |
| | T-MSi | - | 8.0 | | | | |
| | DSMA | - | | | | 12.0 | |
| Mn | | | 2400 | 6000 | 6500 | 6000 | 6500 |
| Mw | | | 3900 | 10000 | 10000 | 10000 | 10000 |
| number of reactive silicon groups in one molecule | | | 1.8 | 2.8 | 2.9 | 2.8 | 1.3 |
| reactive silicon group equivalent (mmol/g) | | | 0.75 | 0.48 | 0.48 | 0.48 | 0.20 |

The abbreviations of the monomers in the above-mentioned Table 1 mean as described below.
MMA: methyl methacrylate
BMA: n-butyl methacrylate
BA: n-butyl acrylate
2-EHA: 2-ethylhexyl acrylate
SMA: stearyl methacrylate
TSMA: 3-methacryloxypropyltrimethoxysilane
T-MSi: 3-mercaptopropyltrimethoxysilane
DSMA: 3-methacryloxypropyldimethoxymethylsilane

### (Synthetic Example 9: Synthesis of high-molecular weight plasticizer (C-1))

Propylene oxide was polymerized using butanol as an initiator and zinc hexacyanocobaltate glyme complex as a catalyst to give polyoxypropylene having a number average molecular weight of 7,000. Then, a methanol solution containing 1.2 equivalents of NaOMe relative to 1 equivalent of hydroxy group of hydroxy group terminal polyoxypropylene was added, methanol was evaporated, and 1.5 equivalents of 3-chloro-1-propene was added to convert the terminal hydroxy group to an allyl group. Then, 36 weight ppm of a platinum divinyldisiloxane complex (3 wt% isopropanol solution based on platinum) was added per 100 parts by weight of the obtained allyl group terminal polyoxypropylene, and 1.69 parts by weight of dimethoxymethylsilane (1.72 parts by weight) was slowly added dropwise with stirring. The mixed solution was reacted at 90°C for 2 hr to give linear polyoxypropylene (high-molecular weight plasticizer (C-1)) having a dimethoxymethylsilyl group on the terminal, 0.7 reactive silicon group on average per 1 molecule, a number average molecular weight of 7,000, and a molecular weight distribution (Mw/Mn) of 1.2.

### (Synthetic Example 10: Synthesis of high-molecular weight plasticizer (C-2))

Propylene oxide was polymerized using butanol as an initiator and zinc hexacyanocobaltate glyme complex as a catalyst to give polyoxypropylene having a number average molecular weight of 7,000. Then, a methanol solution containing 1.2 equivalents of NaOMe relative to 1 equivalent of hydroxy group of hydroxy group terminal polyoxypropylene was added, methanol was evaporated, and 1.5 equivalents of 3-chloro-1-propene was added to convert the terminal hydroxy group to an allyl group. Then, 36 weight ppm of a platinum divinyldisiloxane complex (3 wt% isopropanol solution based on platinum) was added per 100 parts by weight of the obtained allyl group terminal polyoxypropylene, and 1.69 parts by weight of trimethoxysilane (1.98 parts by weight) was slowly added dropwise with stirring. The mixed solution was reacted at 90°C for 2 hr to give linear polyoxypropylene (high-molecular weight plasticizer (C-2)) having a trimethoxysilyl group on the terminal, 0.7 reactive silicon group on average per 1 molecule, a number average molecular weight of 7,000, and a molecular weight distribution (Mw/Mn) of 1.2.

### (Synthetic Example 11: High-molecular weight plasticizer (C-3))

Propylene oxide was polymerized using polyoxypropylene triol having a molecular weight of about 3,000 as an initiator and zinc hexacyanocobaltate glyme complex as a catalyst to give polyoxypropylene triol having a number average molecular weight of 16,400. Then, a methanol solution containing 1.2 equivalents of NaOMe relative to 1 equivalent of hydroxy group of polyoxypropylene triol was added, methanol was evaporated, and 1.5 equivalents of 3-chloro-1-propene was added to convert the terminal hydroxy group to an allyl group to give allyl group terminal polyoxypropylene (high-molecular weight plasticizer (C-3)).

### (Example 1)

Polymer (A-1) (60.0 parts by weight) obtained in Synthetic Example 1 and an isobutanol solution (66.7 parts by weight) of polymer (B-1) obtained in Synthetic Example 4 were mixed, and isobutanol was evaporated under reduced pressure to give a polymer mixture having a weight ratio of polymer (A-1)/ polymer (B-1) of 60/40. The high-molecular weight plasticizer (C-1) (30 parts by weight) obtained in Synthetic Example 8 was added to the polymer mixture (100 parts by weight), and the mixture was kneaded to give a curable composition.

### (Viscosity)

The viscosity of a curable composition (free of dehydrating agent, adhesiveness-imparting agent and catalyst shown in Table 2) was measured at 23°C, relative humidity 50% by an E-type viscometer (manufactured by TOKYO KEIKI INC., measurement cone: 3°C×R14). The results thereof are shown in the following Tables.

### (Tensile property)

Vinyltrimethoxysilane (manufactured by Momentive, trade name: A-171) (1 part by weight), N-(2-aminoethyl)-3-aminopropyltrimethoxysilane (manufactured by Shin-Etsu Chemical Co., Ltd., trade name: KBM-603) (2 parts by weight), and dioctyltin dilaurate (manufactured by Nitto Kasei Co., Ltd., trade name: NEOSTANN U-810) (0.5 parts by weight) were added to 100 parts by weight of the total content of polymer (A-1) and polymer (B-1), and the mixture was sufficiently mixed. The obtained composition was filled in a 3 mm-thick polyethylene frame without allowing entry of bubbles, and aged at 23°C, relative humidity 50% for 3 days, and further at 50°C for 4 days to give a cured product. A No. 7 dumbbell was punched out from the obtained cured product according to JIS K 6251, subjected to a tensile test (tension speed 200 mm/min, 23°C, relative humidity 50%), and modulus at 50% elongation (M50), tensile strength at break (TB), and elongation rate at break (EB) were measured. The results thereof are shown in the following Tables.

### (Examples 2 - 12, Comparative Examples 1 - 5)

### (Examples 2 to 5 are not according to the invention)

Using polymer (A), polymer (B), polymer (P), high-molecular weight plasticizer (C), low-molecular weight plasticizer, dehydrating agent, adhesiveness-imparting agent and catalyst in the kinds and amounts shown in the following Tables and in the same manner as in Example 1, a curable composition was prepared and evaluated. As the viscosity, the viscosity of curable compositions fee of dehydrating agent, adhesiveness-imparting agent and catalyst, shown in the following Tables, was measured. The results thereof are shown in the following Tables.

**Table 2**

| | | Ex. 1 | Ex. 2 | Ex. 3 | Ex. 4 | Ex. 5 | Ex. 6 |
|---|---|---|---|---|---|---|---|
| polymer (A) | (A-1) | 60 | 60 | | | | |
| | (A-2) | | | 60 | 60 | 60 | |
| | (A-3) | | | | | | 60 |
| polymer (B) | (B-1) | 40 | 40 | 40 | 40 | 40 | 40 |
| | (B-2) | | | | | | |
| | (B-3) | | | | | | |
| polymer (P) | (P-1) | | | | | | |
| | (P-2) | | | | | | |
| high-molecular weight plasticizer (C) | (C-1) | 30 | | 30 | | | 30 |
| | (C-2) | | 30 | | 30 | | |
| | (C-3) | | | | | 30 | |
| | LBU-25 | | | | | | |
| | UP-1061 | | | | | | |
| | UP-1080 | | | | | | |
| low-molecular weight plasticizer | DINP | | | | | | |
| viscosity of composition (23°C) (Pa•S) | | 53 | 53 | 42 | 42 | 45 | 50 |
| dehydrating agent | A-171 | 1 | 1 | 1 | 1 | 1 | 1 |
| adhesiveness-imparting agent | KBM-603 | 2 | 2 | 2 | 2 | 2 | 2 |
| catalyst | NEOSTANN U-810 | 0.5 | 0.5 | 0.2 | 0.2 | 0.2 | 0.5 |
| tensile test | M50 (MPa) | 0.5 | 0.5 | 0.3 | 0.3 | 0.4 | 0.6 |
| | TB (MPa) | 3.5 | 3.3 | 2.0 | 2.1 | 3.0 | 5.5 |
| | EB (%) | 380 | 180 | 130 | 130 | 170 | 450 |

**Table 3**

| | | Ex. 7 | Ex. 8 | Ex. 9 | Ex. 10 | Ex. 11 | Ex. 12 ' |
|---|---|---|---|---|---|---|---|
| polymer (A) | (A-1) | | | | | | |
| | (A-2) | | | | | | |
| | (A-3) | 60 | 60 | 60 | 60 | 60 | 60 |
| polymer (B) | (B-1) | | | | | | |
| | (B-2) | 40 | | | | | |
| | (B-3) | | 40 | 40 | 40 | 40 | 40 |
| polymer (P) | (P-1) | | | | | | |
| | (P-2) | | | | | | |
| high-molecular weight plasticizer (C) | (C-1) | 30 | 30 | 30 | 30 | 30 | 30 |
| | (C-2) | | | | | | |
| | (C-3) | | | | | | |
| | LBU-25 | | | 20 | | | |
| | UP-1061 | | | | 20 | | |
| | UP-1080 | | | | | 20 | |
| low-molecular weight plasticizer | DINP | | | | | | 20 |
| viscosity of composition (23°C) (Pa•S) | | 81 | 30 | 20 | 22 | 25 | 16 |
| dehydrating agent | A-171 | 1 | 1 | 1 | 1 | 1 | 1 |
| adhesiveness-imparting agent | KBM-603 | 2 | 2 | 2 | 2 | 2 | 2 |
| catalyst | NEOSTANN U-810 | 0.5 | 0.5 | 0.5 | 0.5 | 0.5 | 0.5 |
| tensile test | M50 (MPa) | 0.6 | 0.4 | 0.3 | 0.3 | 0.3 | 0.3 |
| | TB (MPa) | 5.8 | 3.8 | 3.8 | 3.5 | 3.3 | 2.4 |
| | EB (%) | 380 | 310 | 480 | 420 | 420 | 280 |

**[Table 4]**

| | | Comp. Ex. 1 | Comp. Ex. 2 | Comp. Ex. 3 | Comp. Ex. 4 | Comp. Ex. 5 |
|---|---|---|---|---|---|---|
| polymer (A) | (A-1) | 60 | | | | |
| | (A-2) | | 60 | 60 | | |
| | (A-3) | | | | 60 | 60 |
| polymer (B) | (B-1) | 40 | 40 | 40 | | |
| | (B-2) | | | | | |
| | (B-3) | | | | | |
| polymer (P) | (P-1) | | | | 40 | |
| | (P-2) | | | | | 40 |
| high-molecular weight plasticizer (C) | (C-1) | | | | 30 | 30 |
| | (C-2) | | | | | |
| | (C-3) | | | | | |
| | LBU-25 | | | | | |
| | UP-1061 | | | | | |
| | UP-1080 | | | | | |
| low-molecular weight plasticizer | DINP | | | 30 | | |
| Viscosity of composition (23°C) (Pa•S) | | 140 | 110 | 25 | 80 | 45 |
| dehydrating agent | A-171 | 1 | 1 | 1 | 1 | 1 |
| adhesiveness-imparting agent | KBM-603 | 2 | 2 | 2 | 2 | 2 |
| catalyst | NEOSTANN U-810 | 0.5 | 0.2 | 0.2 | 0.5 | 0.5 |
| tensile test | M50 (MPa) | 1.8 | 0.8 | 0.3 | 0.4 | 0.1 |
| | TB (MPa) | 5.1 | 5.5 | 1.7 | 3.3 | 1.7 |
| | EB (%) | 210 | 100 | 130 | 300 | 430 |

In the above-mentioned Tables 2 - 4, the numerical values of each component are in parts by weight.

In the above-mentioned Tables 2 - 4, moreover, the substance name and manufacturer of each component shown by the trade name are as described below.
LBU-25: urethanated polyoxypropylene (Sanyo Chemical Industries, Ltd., number average molecular weight (Mn) 4,100, molecular weight distribution (Mw/Mn) 1.2)
UP-1061: poly(meth)acrylate (Toagosei Co., Ltd., number average molecular weight (Mn) 870, molecular weight distribution (Mw/Mn) 1.7)
UP-1080: poly(meth)acrylate (Toagosei Co., Ltd., number average molecular weight (Mn) 2,700, molecular weight distribution (Mw/Mn) 2.1)
DINP: diisononyl phthalate (J-PLUS Co., Ltd., molecular weight 418)
A-171: vinyltrimethoxysilane (Momentive)
KBM-603: N-(2-aminoethyl)-3-aminopropyltrimethoxysilane (Shin-Etsu Chemical Co., Ltd.)
NEOSTANN U-810: dioctyltin dilaurate (Nitto Kasei Co., Ltd.)

From the comparison of Examples and Comparative Examples shown in the above-mentioned Tables 2 - 4, it is known that a curable composition containing polymer (A), polymer (B) and high-molecular weight plasticizer (C) has low viscosity, and a cured product obtained therefrom is superior in tensile property. From the comparison of Example 1 and Example 2, moreover, it is known that a cured product superior in elongation rate at break (EB) can be obtained when polymer (A) and high-molecular weight plasticizer (C) have the same reactive silicon group. From the comparison of Example 8 and Examples 9 - 11, it is known that a combined use of high-molecular weight plasticizer (C1) having a reactive silicon group (i.e., high-molecular weight plasticizer (C-1)) and high-molecular weight plasticizer (C2) free of a reactive silicon group (i.e., LBU-25, UP-1061 or UP-1080) as high-molecular weight plasticizer (C) enables improvement of elongation rate at break (EB) while maintaining tensile strength at break (TB).

### (Example 13)

Polymer (A-3) (60.0 parts by weight) obtained in Synthetic Example 3 and an isobutanol solution (66.7 parts by weight) of polymer (B-3) obtained in Synthetic Example 6 were mixed, and isobutanol was evaporated under reduced pressure to give a polymer mixture having a weight ratio of polymer (A-3)/ polymer (B-3) of 60/40. The polymer mixture (100 parts by weight) was mixed with high-molecular weight plasticizer (C-1) (30 parts by weight) obtained in Synthetic Example 8, fatty acid-treated calcium carbonate (manufactured by Shiraishi Calcium Kaisha, Ltd., trade name: HAKUENKA CCR) (40 parts by weight), a UV absorber (manufactured by Sumitomo Chemical Company, Limited, trade name: Sumisorb 400) (1 part by weight), and hindered amine-based light stabilizer (HALS) (manufactured by ADEKA CORPORATION, trade name: Adekastab LA-63P) (1 part by weight). The mixture was sufficiently kneaded, and passed 3 times through three paint rolls to disperse each component. Thereafter, the mixture was dehydrated at 120°C for 2 hr under reduced pressure, and the dehydrated mixture was cooled to 50°C or below. To the cooled mixture were added vinyltrimethoxysilane (manufactured by Momentive, trade name: A-171) (3 parts by weight) as a dehydrating agent, N-(2-aminoethyl)-3-aminopropyltrimethoxysilane (manufactured by Shin-Etsu Chemical Co., Ltd., trade name: KBM-603) (5 parts by weight) as an adhesiveness-imparting agent, and dioctyltin dilaurate (manufactured by Nitto Kasei Co., Ltd., trade name: NEOSTANN U-810) (1 part by weight) as a catalyst, and the mixture was kneaded substantially in the absence of moisture. The obtained composition was filled in a moisture-proof cartridge-type container, which was tightly sealed to give a one-component curable composition.

### (viscosity)

Viscosity of a curable composition at a rotor rotation number of 2 rpm or 20 rpm was measured at 23°C, relative humidity 50% by a BH-type viscometer, rotor No.6 (manufactured by Toki Sangyo Co., Ltd.). The results thereof are shown in the following Tables.

### (Tensile property)

A curable composition was filled in a 3 mm-thick polyethylene frame without allowing entry of bubbles, and aged at 23°C, relative humidity 50% for 3 days, and further at 50°C for 4 days to give a cured product. A No. 7 dumbbell was punched out from the obtained cured product according to JIS K 6251, subjected to a tensile test (tension speed 200 mm/min, 23°C, relative humidity 50%), and modulus at 50% elongation (M50), tensile strength at break (TB), and elongation rate at break (EB) were measured. The results thereof are shown in the following Tables.

### (Examples 14 - 20)

Polymer (A-3), polymer (B-3), high-molecular weight plasticizer (C-1), filler, UV absorber, hindered amine-based light stabilizer (HALS), dehydrating agent, adhesiveness-imparting agent, catalyst (tin compound, amine, carboxylic acid) in the amounts shown in Tables 4 and 5 were mixed to give a curable composition, and the composition was evaluated in the same manner as in Example 13. The results thereof are shown in the following Tables.

**[Table 5]**

| | | Ex. 13 | Ex. 14 | Ex. 15 | Ex. 16 |
|---|---|---|---|---|---|
| polymer (A-3) | | 60 | 60 | 60 | 60 |
| polymer (B-3) | | 40 | 40 | 40 | 40 |
| high-molecular weight plasticizer (C-1) | | 30 | 30 | 30 | 30 |
| filler | HAKUENKA CCR | 40 | | | |
| | NANO COAT S25 | | 40 | | |
| | NANOX#30 | | | 40 | |
| | TIPAQUE R-820 | | | | 40 |
| | HIGILITE H42 M | | | | |
| | PANSIL Ultraspheres2000 | | | | |
| UV absorber | Sumisorb 400 | 1 | 1 | 1 | 1 |
| HALS | Adekastab LA-63P | 1 | 1 | 1 | 1 |
| dehydrating agent | A-171 | 3 | 3 | 3 | 3 |
| adhesiveness-imparting agent | KBM-603 | 5 | 5 | 5 | 5 |
| tin compound | NEOSTANN U-810 | 1 | 1 | 1 | 1 |
| | NEOSTANN U-50 | | | | |
| amine | N,N-diethyl-1,3-propanediamine | | | | |
| carboxylic acid | VERSATIC 10 | | | | |
| viscosity of composition (23°C) (Pa•s) | rotor rotation number: 2 rpm | 120 | 46 | 30 | 30 |
| | rotor rotation number: 20 rpm | 50 | 34 | 30 | 30 |
| tensile test | M50 (MPa) | 1.0 | 0.9 | 1.1 | 0.9 |
| | TB (MPa) | 3.4 | 3.8 | 4.8 | 5.0 |
| | EB (%) | 210 | 260 | 260 | 310 |

**[Table 6]**

| | | Ex. 17 | Ex. 18 | Ex. 19 | Ex. 20 |
|---|---|---|---|---|---|
| polymer (A-3) | | 60 | 60 | 60 | 60 |
| polymer (B-3) | | 40 | 40 | 40 | 40 |
| high-molecular weight plasticizer (C-1) | | 30 | 30 | 30 | 30 |
| filler | HAKUENKA CCR | | | | |
| | NANO COAT S25 | | | 40 | 40 |
| | NANOX#30 | | | | |
| | TIPAQUE R-820 | | | | |
| | HIGILITE H42 M | 40 | | | |
| | PANSIL Ultraspheres2000 | | 40 | | |
| UV absorber | Sumisorb 400 | 1 | 1 | 1 | 1 |
| HALS | Adekastab LA-63P | 1 | 1 | 1 | 1 |
| dehydrating agent | A-171 | 3 | 3 | 3 | 3 |
| adhesiveness-imparting agent | KBM-603 | 5 | 5 | 5 | 5 |
| tin compound | NEOSTANN U-810 | 1 | 1 | | |
| | NEOSTANN U-50 | | | 3 | |
| amine | N,N-diethyl-1,3-propanediamine | | | 0.5 | 0.5 |
| carboxylic acid | VERSATIC 10 | | | | 2.5 |
| viscosity of composition (23°C) (Pa•s) | rotor rotation number: 2 rpm | 33 | 33 | 45 | 60 |
| | rotor rotation number: 20 rpm | 30 | 32 | 34 | 40 |
| tensile test | M50 (MPa) | 1.1 | 1.0 | 1.1 | 0.7 |
| | TB (MPa) | 4.7 | 4.7 | 4.8 | 4.5 |
| | EB (%) | 290 | 270 | 260 | 280 |

In the above-mentioned Tables 5 and 6, the numerical values of each component are in parts by weight.

In the above-mentioned Tables 5 and 6, moreover, the substance name and manufacturer of each component shown by the trade name are as described below.
HAKUENKA CCR: fatty acid-treated colloidal calcium carbonate (Shiraishi Calcium Kaisha, Ltd., average primary particle size 0.08 µm)
NANO COAT S25: fatty acid-treated heavy calcium carbonate (MARUO CALCIUM CO., LTD., average primary particle size 1.0 µm)
NANOX#30: heavy calcium carbonate (MARUO CALCIUM CO., LTD., average primary particle size 0.7 µm)
TIPAQUE R-820: titanium oxide (ISHIHARA SANGYO KAISHA, LTD.)
HIGILITE H42 M: aluminum hydroxide (Showa Denko K.K.)
PANSIL Ultraspheres2000: hollow alumina silica fine particles (TOLSA)
Sumisorb 400: 2,4-di-tert-butylphenyl-3,5-di-tert-butyl-4-hydroxybenzoate (Sumitomo Chemical Company, Limited)
Adekastab LA-63P: condensate of 1,2,2,6,6-pentamethyl-4-piperidinol and β,β,β',β'-tetramethyl-2,4,8,10-tetraoxaspiro(5.5)undecane-3,9-diethanol (ADEKA CORPORATION)
A-171: vinyltrimethoxysilane (Momentive)
KBM-603: N-(2-aminoethyl)-3-aminopropyltrimethoxysilane (Shin-Etsu Chemical Co., Ltd.)
NEOSTANN U-810: dioctyltin dilaurate (Nitto Kasei Co., Ltd.)
NEOSTANN U-50: tin bisneodecanoate (Nitto Kasei Co., Ltd.)
VERSATIC 10: neodecanoic acid (Japan Epoxy Resin Co., Ltd.)

As shown in Tables 5 and 6, it is clear that, by adding a particular filler to a curable composition containing polymer (A-3), polymer (B-3) and high-molecular weight plasticizer (C), a cured product superior in the tensile property is obtained from the composition. As calcium carbonate, heavy calcium carbonate having an average primary particle size of less than 1 µm is preferable.

### Industrial Applicability

The curable composition of the present invention can be preferably used for a sealing material, an adhesive, a coating film waterproofing agent and the like.

## Claims

1. A curable composition comprising
oxyalkylene-based polymer (A) having more than one reactive silicon group on average in one molecule, which group is a dimethoxymethylsilyl group,
(meth)acrylate-based polymer (B) having a reactive silicon group represented by the formula (2):
-SiX₃ (2)
wherein each X is independently a hydroxy group or a hydrolyzable group, wherein a reactive silicon group equivalent is not less than 0.30 mmol/g, and
high-molecular weight plasticizer (C1) having more than 0 and not more than one reactive silicon group on average in one molecule, which group is a dimethoxymethylsilyl group, wherein the high-molecular weight plasticizer (C1) has a number average molecular weight of 1,000 to 15,000.

2. The curable composition according to claim 1, wherein polymer (A) has not less than 1.2 reactive silicon groups on average in one molecule.

3. The curable composition according to claim 1 or 2, wherein the high-molecular weight plasticizer (C1) is an oxyalkylene-based polymer.

4. The curable composition according to claim 1 or 2, wherein the high-molecular weight plasticizer (C1) is a (meth)acrylate-based polymer.

5. The curable composition according to any one of claims 1 to 4, wherein the content of the high-molecular weight plasticizer (C1) is 20 to 100 parts by weight per 100 parts by weight of the total content of polymer (A) and polymer (B).

6. The curable composition according to any one of claims 1 to 5, wherein the weight ratio of polymer (A) and polymer (B) (polymer (A): polymer (B)) is 90:10 to 30:70.

7. The curable composition according to any one of claims 1 to 6, wherein the polymer (A) has more than one reactive silicon group on average in one terminal part.

8. The curable composition according to any one of claims 1 to 7, wherein the monomers constituting the polymer (B) comprise alkyl (meth)acrylate, wherein the alkyl has 1 to 6 carbon atoms, and alkyl (meth)acrylate wherein the alkyl has 7 to 30 carbon atoms.

9. The curable composition according to any one of claims 1 to 8, wherein the monomer(s) constituting the polymer (B) comprise(s), in the total monomer, not less than 40 wt% of monomer (b1) free of a reactive silicon group, the homopolymer of said monomer having a glass transition temperature of not more than 80°C, determined according to J. Brandrup et al., Polymer Handbook-Fourth Edition.

10. The curable composition according to any one of claims 1 to 9, wherein the polymer (B) has a number average molecular weight of not less than 4,000.

11. The curable composition according to any one of claims 1 to 9, wherein the polymer (B) has a number average molecular weight of not less than 1,000 and less than 4,000.

12. The curable composition according to any one of claims 1 to 11, wherein the monomer(s) constituting the polymer (B) comprise(s), in the total monomer, not less than 40 wt% of monomer (b2) free of a reactive silicon group, the homopolymer of said monomer having a glass transition temperature of not less than -25°C, determined according to J. Brandrup et al., Polymer Handbook-Fourth Edition.

13. The curable composition according to any one of claims 1 to 12, further comprising, as a filler, heavy calcium carbonate having an average primary particle size of less than 1 µm.

14. The curable composition according to any one of claims 1 to 13, further comprising titanium oxide as a filler.

15. The curable composition according to any one of claims 1 to 14, further comprising aluminum hydroxide as a filler.

16. A coating film waterproofing agent comprising the curable composition according to any one of claims 1 to 15.

17. A cured product obtainable from the curable composition according to any one of claims 1 to 15.

## Patentansprüche

1. Eine härtbare Zusammensetzung, umfassend
Polymer auf Oxyalkylenbasis (A) mit durchschnittlich mehr als einer reaktiven Siliciumgruppe in einem Molekül, wobei die Gruppe eine Dimethoxymethylsilylgruppe ist,
Polymer auf (Meth)acrylatbasis (B), welches eine reaktive Siliciumgruppe, dargestellt durch die Formel (2):
-SiX₃ (2)
aufweist, wobei jedes X unabhängig eine Hydroxygruppe oder eine hydrolysierbare Gruppe ist, wobei ein Äquivalent an reaktiven Siliciumgruppen nicht weniger als 0,30 mMol/g ist, und
Weichmacher mit hohem Molekulargewicht (C1), der durchschnittlich mehr als 0 und nicht mehr als eine reaktive Siliciumgruppe in einem Molekül aufweist, wobei die Gruppe eine Dimethoxymethylsilylgruppe ist, wobei der Weichmacher mit hohem Molekulargewicht (C1) ein Zahlenmittel des Molekulargewichts von 1.000 bis 15.000 aufweist.

2. Die härtbare Zusammensetzung nach Anspruch 1, wobei Polymer (A) durchschnittlich nicht weniger als 1,2 reaktive Siliciumgruppen in einem Molekül enthält.

3. Die härtbare Zusammensetzung nach Anspruch 1 oder 2, wobei der Weichmacher mit hohem Molekulargewicht (C1) ein Polymer auf Oxyalkylenbasis ist.

4. Die härtbare Zusammensetzung nach Anspruch 1 oder 2, wobei der Weichmacher mit hohem Molekulargewicht (C1) ein Polymer auf (Meth)acrylatbasis ist.

5. Die härtbare Zusammensetzung nach einem der Ansprüche 1 bis 4, wobei der Gehalt des Weichmachers mit hohem Molekulargewicht (C1) 20 bis 100 Gewichtsteile je 100 Gewichtsteile des gesamten Gehalts an Polymer (A) und Polymer (B) beträgt.

6. Die härtbare Zusammensetzung nach einem der Ansprüche 1 bis 5, wobei das Gewichtsverhältnis von Polymer (A) und Polymer (B) (Polymer (A): Polymer (B)) 90:10 bis 30:70 beträgt.

7. Die härtbare Zusammensetzung nach einem der Ansprüche 1 bis 6, wobei das Polymer (A) durchschnittlich mehr als eine reaktive Siliciumgruppe in einem Endabschnitt enthält.

8. Die härtbare Zusammensetzung nach einem der Ansprüche 1 bis 7, wobei die das Polymer (B) bildenden Monomere Alkyl(meth)acrylat, wobei das Alkyl 1 bis 6 Kohlenstoffatome enthält, und Alkyl(meth)acrylat, wobei das Alkyl 7 bis 30 Kohlenstoffatome enthält, umfassen.

9. Die härtbare Zusammensetzung nach einem der Ansprüche 1 bis 8, wobei die (das) das Polymer (B) bildende(n) Monomer(e), im Gesamtmonomer, nicht weniger als 40 Gew.-% an Monomer (b1), das frei von einer reaktiven Siliciumgruppe ist, umfasst (umfassen), wobei das Homopolymer des Monomers eine Glasübergangstemperatur von nicht mehr als 80°C aufweist, bestimmt gemäß J. Brandrup et al., Polymer Handbook-4. Auflage.

10. Die härtbare Zusammensetzung nach einem der Ansprüche 1 bis 9, wobei das Polymer (B) ein Zahlenmittel des Molekulargewichts von nicht weniger als 4.000 aufweist.

11. Die härtbare Zusammensetzung nach einem der Ansprüche 1 bis 9, wobei das Polymer (B) ein Zahlenmittel des Molekulargewichts von nicht weniger als 1.000 und weniger als 4.000 aufweist.

12. Die härtbare Zusammensetzung nach einem der Ansprüche 1 bis 11, wobei die (das) das Polymer (B) bildende(n) Monomer(e), im Gesamtmonomer, nicht weniger als 40 Gew.-% an Monomer (b2), das frei von einer reaktiven Siliciumgruppe ist, umfasst (umfassen), wobei das Homopolymer des Monomers eine Glasübergangstemperatur von nicht weniger als -25°C aufweist, bestimmt gemäß J. Brandrup et al., Polymer Handbook-4. Auflage.

13. Die härtbare Zusammensetzung nach einem der Ansprüche 1 bis 12, ferner umfassend als einen Füllstoff ein schweres Calciumcarbonat mit einer durchschnittlichen Primärteilchengröße von weniger als 1 µm.

14. Die härtbare Zusammensetzung nach einem der Ansprüche 1 bis 13, ferner umfassend Titanoxid als einen Füllstoff.

15. Die härtbare Zusammensetzung nach einem der Ansprüche 1 bis 14, ferner umfassend Aluminiumhydroxid als einen Füllstoff.

16. Ein einem Beschichtungsfilm wasserabweisende Eigenschaft verleihendes Mittel, umfassend die härtbare Zusammensetzung nach einem der Ansprüche 1 bis 15.

17. Ein gehärtetes Produkt, erhältlich aus der härtbaren Zusammensetzung nach einem der Ansprüche 1 bis 15.

## Revendications

1. Composition durcissable comprenant
un polymère (A) à base d'oxyalkylène ayant plus d'un groupe silicié réactif en moyenne dans une molécule, lequel groupe est un groupe diméthoxyméthylsilyle,
un polymère (B) à base de (méth)acrylate ayant un groupe silicié réactif représenté par la formule (2) :
-SiX₃ (2)
dans laquelle chaque X est indépendamment un groupe hydroxy ou un groupe hydrolysable, dans lequel un équivalent en groupe silicié réactif n'est pas inférieur à 0,30 mmol/g, et
un plastifiant (C1) de poids moléculaire élevé ayant plus de 0 et pas plus d'un groupe silicié réactif en moyenne dans une molécule, lequel groupe est un groupe diméthoxyméthylsilyle, dans lequel le plastifiant de poids moléculaire élevé (C1) a un poids moléculaire moyen en nombre de 1000 à 15 000.

2. Composition durcissable selon la revendication 1, dans laquelle le polymère (A) n'a pas moins de 1,2 groupe silicié réactif en moyenne dans une molécule.

3. Composition durcissable selon la revendication 1 ou 2, dans laquelle le plastifiant (C1) de poids moléculaire élevé est un polymère à base d'oxyalkylène.

4. Composition durcissable selon la revendication 1 ou 2, dans laquelle le plastifiant (C1) de poids moléculaire élevé est un polymère à base de (méth)acrylate.

5. Composition durcissable selon l'une quelconque des revendications 1 à 4, dans laquelle la teneur du plastifiant (C1) de poids moléculaire élevé est de 20 à 100 parties en poids pour 100 parties en poids de la teneur totale en polymère (A) et en polymère (B).

6. Composition durcissable selon l'une quelconque des revendications 1 à 5, dans laquelle le rapport en poids entre le polymère (A) et le polymère (B) (polymère (A) : polymère (B)) est de 90:10 à 30:70.

7. Composition durcissable selon l'une quelconque des revendications 1 à 6, dans laquelle le polymère (A) a plus d'un groupe silicié réactif en moyenne dans une partie terminale.

8. Composition durcissable selon l'une quelconque des revendications 1 à 7, dans laquelle les monomères constituant le polymère (B) comprennent un (méth)acrylate d'alkyle, dans lequel l'alkyle a 1 à 6 atomes de carbone, et un (méth)acrylate d'alkyle dans lequel l'alkyle a 7 à 30 atomes de carbone.

9. Composition durcissable selon l'une quelconque des revendications 1 à 8, dans laquelle le ou les monomère(s) constituant le polymère (B) comprend/comprennent, dans le monomère total, pas moins de 40 % en poids de monomère (b1) exempt d'un groupe silicié réactif, l'homopolymère dudit monomère ayant une température de transition vitreuse de pas plus de 80 °C, déterminée conformément à J. Brandrup et al., Polymer Handbook-Fourth Edition.

10. Composition durcissable selon l'une quelconque des revendications 1 à 9, dans laquelle le polymère (B) a un poids moléculaire moyen en nombre de pas moins de 4000.

11. Composition durcissable selon l'une quelconque des revendications 1 à 9, dans laquelle le polymère (B) a un poids moléculaire moyen en nombre de pas moins de 1000 et de moins de 4000.

12. Composition durcissable selon l'une quelconque des revendications 1 à 11, dans laquelle le ou les monomère(s) constituant le polymère (B) comprend/comprennent, dans le monomère total, pas moins de 40 % en poids de monomère (b2) exempt d'un groupe silicié réactif, l'homopolymère dudit monomère ayant une température de transition vitreuse de pas moins de -25 °C, déterminée conformément à J. Brandrup et al., Polymer Handbook-Fourth Edition.

13. Composition durcissable selon l'une quelconque des revendications 1 à 12, comprenant en outre, en tant que charge, un carbonate de calcium lourd ayant une taille moyenne de particule primaire de moins de 1 µm.

14. Composition durcissable selon l'une quelconque des revendications 1 à 13, comprenant en outre un oxyde de titane en tant que charge.

15. Composition durcissable selon l'une quelconque des revendications 1 à 14, comprenant en outre un hydroxyde d'aluminium en tant que charge.

16. Agent imperméabilisant sous forme de film de revêtement comprenant la composition durcissable selon l'une quelconque des revendications 1 à 15.

17. Produit durci pouvant être obtenu à partir de la composition durcissable selon l'une quelconque des revendications 1 à 15.
